# EUROPEAN PATENT SPECIFICATION

(11) **EP 3 441 306 B1**
(45) Date of publication and mention of the grant of the patent: **04.10.2023**
(21) Application number: 18186920.7
(22) Date of filing: 01.08.2018
(51) Int. Cl.: B64C 13/50, B64C 27/57, G05D 1/06, G05D 1/10, G05D 1/12, G05D 1/08

(54) **SYSTEM AND METHOD FOR ROTORCRAFT APPROACH TO HOVER**
SYSTEM UND VERFAHREN FÜR DREHFLÜGLERANFLUG IM SCHWEBEFLUG
SYSTÈME ET PROCÉDÉ D'APPROCHE D'UN GIRAVION EN VOL STATIONNAIRE

(30) Priority: 07.08.2017 US 201762542113 P
(43) Date of publication of application: 13.02.2019
(73) Proprietor: Textron Innovations Inc., Providence, Rhode Island 02903 (US)
(72) Inventor: WORSHAM II, Robert Earl, Weatherford, TX Texas 76088 (US); GILLETT, Luke Dafydd, Grapevine, TX Texas 76051 (US)
(74) Representative: Barker Brettell LLP

(56) References cited:
- EP-A1- 3 355 150
- EP-B1- 3 355 150
- WO-A1-2013/105094
- CN-A- 102 156 480
- US-A1- 2014 163 775
- US-A1- 2017 111 102
- US-A1- 2017 137 128
- US-B1- 9 162 753
- Dji: "Inspire 1 Bedienungsanleitung V1.0", , 20 March 2015 (2015-03-20), XP055507630, Retrieved from the Internet: URL:https://dl.djicdn.com/downloads/INSPIR E+1+series/20171221/INSPIRE_1_V2.0_User_Ma nual_EN.pdf [retrieved on 2018-09-18]
- JAY HYUK CHOI ET AL: "Helicopter guidance for vision-based tracking and landing on a moving ground target", CONTROL, AUTOMATION AND SYSTEMS (ICCAS), 2011 11TH INTERNATIONAL CONFERENCE ON, IEEE, 26 October 2011 (2011-10-26), pages 867-872, XP032075528, ISBN: 978-1-4577-0835-0

## Description

### CROSS-REFERENCE TO RELATED APPLICATIONS

This application claims the benefit of U.S. Provisional Application No. 62/542,113, filed on August 7, 2017.

### TECHNICAL FIELD

The present disclosure generally relates to aircraft flight control systems, and more particularly, to rotorcraft fly-by-wire (FBW) control laws.

### BACKGROUND

A rotorcraft may include one or more rotor systems. Examples of rotor systems include main rotor systems and tail rotor systems. A main rotor system may generate aerodynamic lift to support the weight of the rotorcraft in flight, and thrust to counteract aerodynamic drag and to move the rotorcraft in forward flight. A tail rotor system may generate thrust in correspondence to rotation of the main rotor system to counter torque created by the main rotor system.

WO 2013105094 A1 discloses a control system configured to control a deceleration process of an air vehicle which comprises at least one tillable propulsion unit, each of the at least one tillable propulsion units is tiltable to provide a thrust whose direction is variable at least between a general vertical thrust vector direction and a general longitudinal thrust vector direction with respect to the air vehicle.

### SUMMARY

According to the present invention, there is provided a Flight Control Computer (FCC) according to claim 1, a rotorcraft according to claim 5 and a method according to claim 14. Optional or preferred features are defined in the dependent claims.

A system of one or more computers can be configured to perform operations or actions by having software, firmware, hardware, or a combination thereof installed on the system that in operation cause or causes the system to perform the actions. One or more computer programs can be configured to perform operations or actions by including instructions that, when executed by a data processing apparatus, cause the apparatus to perform the actions.

An embodiment rotorcraft includes a power train coupled to a body, the power train having a power source and a drive shaft coupled to the power source, a rotor system coupled to the power train and comprising a plurality of rotor blades, a flight control system (FCS) operable to change at least one operating condition of the rotor system, a pilot control assembly (PCA) operable to receive commands from a pilot, where the FCS is a fly-by-wire flight control system in electrical communication with the PCA, and a flight control computer (FCC) in electrical communication between the FCS and the PCA. The FCC is operable to receive a pilot command to mark a target, designate a hover location in response to the pilot command to mark the target, receive a pilot command to return to the target, engage an approach-to-hover maneuver in response to the pilot command to return to the target, and transition to a second operating condition of the rotor system in response to engaging the approach-to-hover maneuver, wherein the second operating condition of the rotor system corresponds to a change in heading, a reduction in airspeed, and a descent in altitude attending the rotorcraft approaching the hover location.

An embodiment flight control computer (FCC) includes a processor and a non-transitory computer-readable storage medium storing a program to be executed by the processor for implementing a control law. The program includes instructions for performing an approach-to-hover maneuver in response to a pilot command, where the pilot command causes a rotorcraft to return to, and hover above, a marked target location.

An embodiment method includes operating a rotorcraft in a first operating condition of a flight control system (FCS), the rotorcraft having a flight control computer (FCC) in electrical communication between the FCS and a pilot control assembly (PCA), overflying a hover location by the rotorcraft, receiving, by the FCC, a pilot command to mark a target, designating the hover location by the FCC in response to receiving the pilot command to mark the target, receiving, by the FCC, a pilot command to return to the target after overflying the hover location and after designating the hover location, engaging an approach-to-hover maneuver by the FCC in response to the pilot command to return to the target, and transitioning to a second operating condition of the FCS by the FCC in response to the FCC engaging the approach-to-hover maneuver, where the second operating condition is operable to reduce airspeed and reduce altitude attending the rotorcraft approaching the hover location.

Certain embodiments may include some, all, or none of the above advantages. One or more other technical advantages may be clear to those skilled in the art upon review of the Figures, descriptions, and claims included herein.

### BRIEF DESCRIPTION OF THE DRAWINGS

Representative aspects of the present disclosure may be understood from the following detailed description when read in conjunction with the accompanying Figures. It is noted that, in accordance with standard practice in industry, various features may not be drawn to scale. For example, dimensions of various features may be arbitrarily increased or reduced for clarity of illustration or description. Corresponding numerals and symbols in different Figures generally refer to corresponding parts, unless otherwise indicated.
Figure 1 representatively illustrates a rotorcraft in accordance with an embodiment.
Figure 2 representatively illustrates a cockpit configuration in accordance with an embodiment.
Figure 3 representatively illustrates an installation of cyclic control assemblies and collective control assemblies in accordance with an embodiment.
Figure 4 representatively illustrates an installation of pedal assemblies in accordance with an embodiment.
Figure 5 representatively illustrates a cyclic trim assembly in accordance with an embodiment.
Figure 6 representatively illustrates a collective trim assembly in accordance with an embodiment.
Figure 7 representatively illustrates an anti-torque trim assembly in accordance with an embodiment.
Figure 8 representatively illustrates a cross-feed arrangement in accordance with an embodiment.
Figure 9 representatively illustrates a three-loop flight control system in accordance with an embodiment.
Figure 10 representatively illustrates a plan view of an approach-to-hover flight path in accordance with an embodiment.
Figure 11 representatively illustrates a Flight Director (FD) mode panel in accordance with an embodiment.
Figure 12 representatively illustrates a vertical descent profile for the approach-to-hover flight path of Figure 10, in accordance with an embodiment.
Figure 13 representatively illustrates a return-to-target (RTT) logic diagram in accordance with an embodiment.
Figure 14 representatively illustrates a collective control logic diagram in accordance with an embodiment.
Figure 15 representatively illustrates a lateral control logic diagram in accordance with an embodiment.
Figure 16 representatively illustrates a pitch control logic diagram in accordance with an embodiment.
Figure 17 illustrates representative airspeed control logic that may be implemented in the pitch control logic of Fig. 16, in accordance with an embodiment.
Figure 18 illustrates representative deceleration control logic that may be implemented in the pitch control logic of Fig. 16, in accordance with an embodiment.
Figure 19 illustrates representative groundspeed control logic that may be implemented in the pitch control logic of Fig. 16, in accordance with an embodiment.
Figure 20 representatively illustrates a fly-by-wire approach-to-hover method in accordance with a representative embodiment.
Figure 21 representatively illustrates a fly-by-wire method for performing a return-to-target (RTT) maneuver in accordance with an embodiment.
Figure 22 representatively illustrates a control law method for performing a return-to-target (RTT) maneuver in accordance with an embodiment.

### DETAILED DESCRIPTION

Representative embodiments are discussed in detail below. It should be appreciated, however, that concepts disclosed herein may be embodied in a variety of contexts, and that specific embodiments discussed herein are merely illustrative and are not intended to limit the scope of the claims. Furthermore, various changes, substitutions, and alterations can be made herein without departing from the scope as defined by the appended claims.

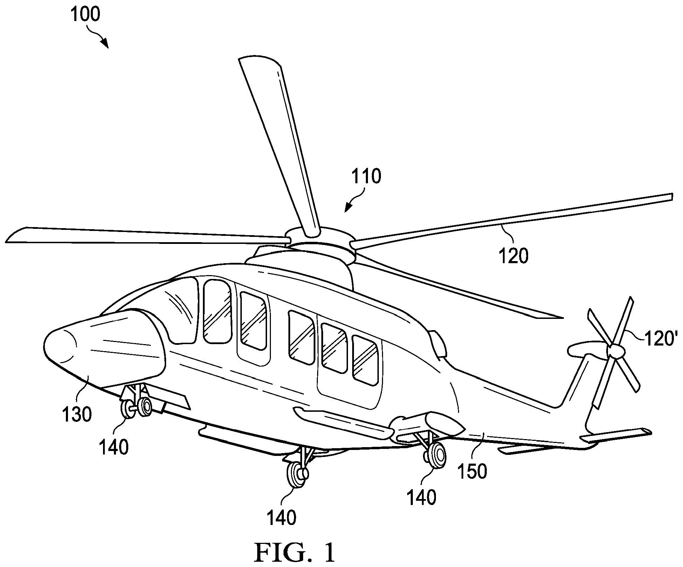

Fig. 1 illustrates a rotorcraft 100 according to a representative embodiment. Rotorcraft 100 includes rotor system 110, main rotor blades 120, fuselage 130, landing gear 140, and tail boom 150. Rotor system 110 may rotate main rotor blades 120. Rotor system 110 may include a control system for selectively controlling pitch of each blade 120 to selectively control direction, thrust, and lift of rotorcraft 100. Fuselage 130 comprises the body of rotorcraft 100 and may be coupled to rotor system 110 such that rotor system 110 and main rotor blades 120 move fuselage 130 through the air in flight. Landing gear 140 support rotorcraft 100 during landing or when rotorcraft 100 is at rest on the ground. Tail boom 150 represents the rear section of rotorcraft 100 and has components of rotor system 110 and tail rotor blades 120'. Tail rotor blades 120' counter torque effect created by rotor system 110 and main rotor blades 120. Teachings of certain embodiments relating to rotor systems described herein may apply to rotor system 110 or other rotor systems (*e.g.,* tilt rotorcraft, tandem rotorcraft, or other helicopter rotor systems). It should also be appreciated that representative embodiments of rotorcraft 100 may apply to aircraft other than rotorcraft, such as airplanes and unmanned aircraft, or the like.

A pilot may manipulate one or more pilot flight controls to achieve controlled aerodynamic flight. Inputs provided by the pilot to the pilot flight controls may be transmitted mechanically or electronically (for example, via a fly-by-wire system) to flight control devices. Flight control devices may include devices operable to change flight characteristics of the aircraft. Representative flight control devices may include a control system operable to change a configuration of main rotor blades 120 or tail rotor blades 120'.

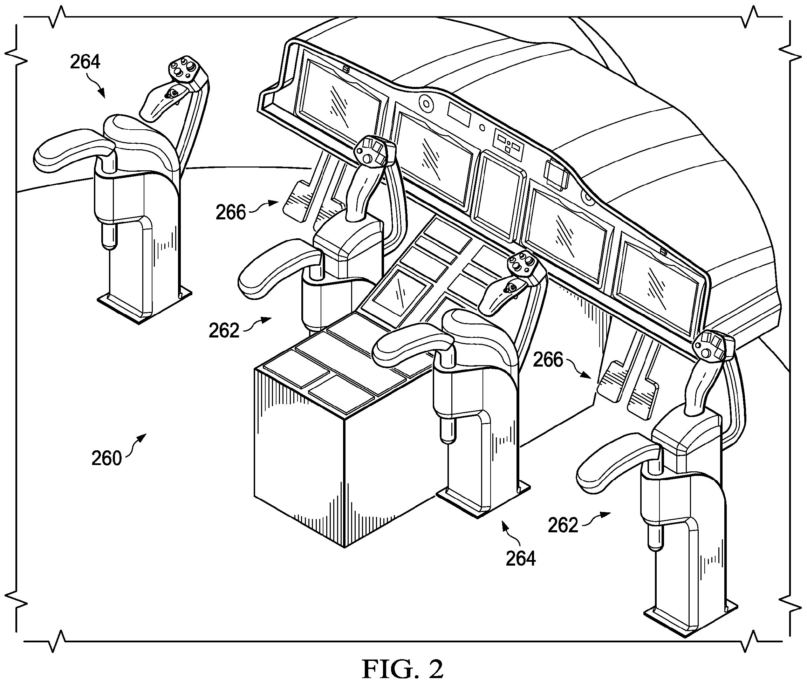

Fig. 2 illustrates a cockpit configuration 260 of rotorcraft 100 according to a representative embodiment. Rotorcraft 100 may include, *e.g.,* three sets of pilot flight controls (*e.g.,* cyclic control assemblies 262, collective control assemblies 264, and pedal assemblies 266). In accordance with a representative embodiment, a set comprising each different pilot flight control assembly is provided for a pilot and a co-pilot (both of which may be referred to as a "pilot" for purposes of discussion herein).

In general, cyclic pilot flight controls may allow a pilot to impart cyclic configurations to main rotor blades 120. Varied cyclic configurations of main rotor blades 120 may cause rotorcraft 100 to tilt in a direction specified by the pilot. For tilting forward and back (pitch) or tilting side-to-side (roll), the angle of attack of main rotor blades 120 may be altered with cyclic periodicity during rotation of rotor system 110, thereby creating variable amounts of lift at varied points in the rotation cycle. Alteration of cyclic configuration of main rotor blades 120 may be accomplished by input from cyclic control assembly 262.

Collective pilot flight controls may allow a pilot to impart collective configurations (*e.g.,* collective blade pitch) to main rotor blades 120. Collective configurations of main rotor blades 120 may change overall lift produced by main rotor blades 120. For increasing or decreasing overall lift in main rotor blades 120, the angle of attack for all main rotor blades 120 may be collectively altered by equal amounts and at the same time, resulting in ascent, descent, acceleration, or deceleration. Alteration of collective configuration of main rotor blades 120 may be accomplished by input from collective control assembly 264.

Anti-torque pilot flight controls may allow a pilot to change the amount of anti-torque force applied to rotorcraft 100. Tail rotor blades 120' may operate to counter torque created by rotor system 110 and main rotor blades 120. Anti-torque pilot flight controls may change the amount of anti-torque force applied to change a heading (yaw) of rotorcraft 100. For example, providing anti-torque force greater than the torque effect created by rotor system 110 and main rotor blades 120 may cause rotorcraft 100 to rotate in a first direction, whereas providing anti-torque force less than the torque effect created by rotor system 110 and main rotor blades 120 may cause rotorcraft 100 to rotate in a second direction opposite the first direction. The anti-torque pilot flight controls may change the amount of anti-torque force applied by changing the pitch of tail rotor blades 120', thereby increasing or reducing thrust produced by tail rotor blades 120' and causing the nose of rotorcraft 100 to yaw in a direction corresponding to application of input from pedal assembly 266.

The rotorcraft 100 may include additional or different anti-torque devices, such as a rudder or a no-tail-rotor (NOTAR) anti-torque device. Conjunctive or alternative anti-torque embodiments may be operable to change an amount of anti-torque force provided by such additional or different anti-torque device or system.

In some embodiments, cyclic control assembly 262, collective control assembly 264, and pedal assemblies 266 may be used in a fly-by-wire (FBW) system. In an example as representatively illustrated in Fig. 2, each cyclic control assembly 262 is located to the right of a pilot seat, each collective control assembly 264 is located to the left of a pilot seat, and each pedal assembly 266 is located in front of a pilot seat. In other embodiments, cyclic control assemblies 262, collective control assemblies 264, and pedal assemblies 266 may be disposed in any suitable location of a cockpit configuration.

In some embodiments, cyclic control assembly 262, collective control assembly 264, and pedal assemblies 266 may be in mechanical communication with trim assemblies that convert mechanical inputs into FEW system flight control commands. These trim assemblies may include, among other items, measurement devices for measuring mechanical inputs (*e.g.,* measuring or otherwise determining input position) and trim motors for back-driving center positions of cyclic control assembly 262, collective control assembly 264, or pedal assemblies 266.

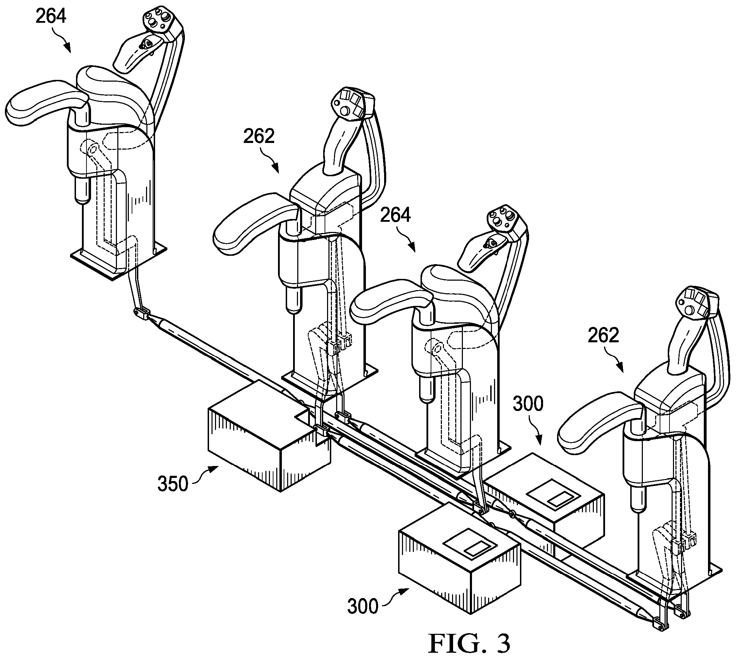

For example, Fig. 3 representatively illustrates an installation of two cyclic control assemblies 262 and two collective control assemblies 264 according to an embodiment. In this example, cyclic control assemblies 262 and collective control assemblies 264 are coupled to three integrated trim assemblies: two cyclic trim assemblies 300 and a collective trim assembly 350. One of the cyclic trim assemblies 300 manages left/right cyclic tilting movements (*e.g.,* roll) and the other cyclic trim assembly 300 manages front/back cyclic tilting movements (*e.g.,* pitch).

Cyclic trim assemblies 300 and collective trim assembly 350 are operable to receive and measure mechanical communications of cyclic and collective motions from a pilot. In a representative aspect, cyclic trim assemblies 300 and collective trim assembly 350 may embody components of a FBW flight control system, and measurements from cyclic trim assemblies 300 and collective trim assembly 350 may be sent to a flight control computer (FCC) operable to instruct rotor system 110 to change a position or configuration of main rotor blades 120 based on received or otherwise determined measurements. For example, the FCC may be in communication with actuators or other devices operable to change the pitch or position of main rotor blades 120.

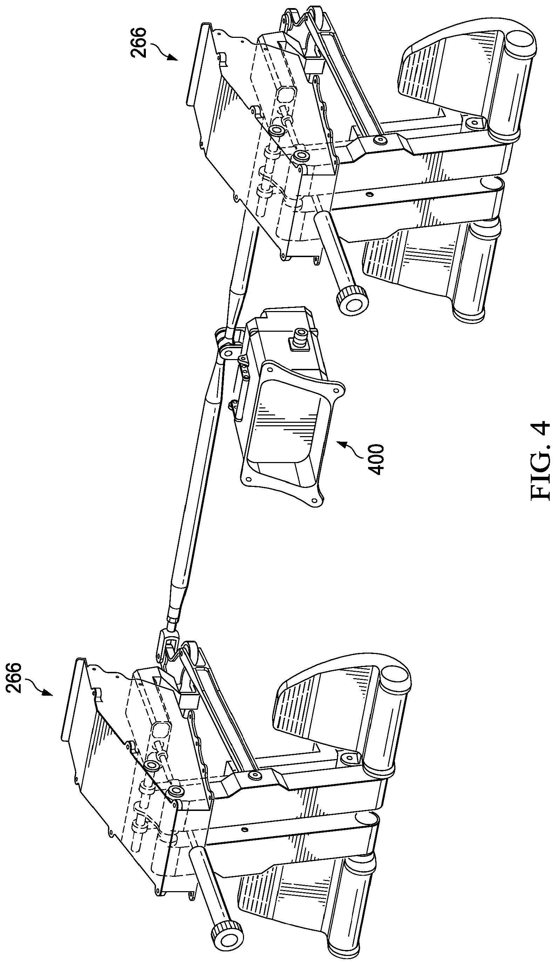

Fig. 4 representatively illustrates an installation of pedal assemblies 266. Two pedal assemblies 266 are coupled to an anti-torque trim assembly 400. Pedal linkages are in mechanical communication, *e.g.,* via a rocker arm and pedal adjustment linkages. The rocker arm is operable to rotate about a point of rotation such that pushing in one pedal causes the pedal adjustment linkage to rotate the rocker arm, which in turn causes the pedal adjustment linkage to push out the other pedal in a corresponding opposite direction.

Rotating the rocker arm also causes a trim linkage to reposition a mechanical input associated with anti-torque trim assembly 400. In this manner, the pilot can mechanically communicate anti-torque commands to anti-torque trim assembly 400 by moving the pedals. Furthermore, trim linkages couple adjacent pedal assemblies 266 together such that pilot pedals and co-pilot pedals are in mechanical communication.

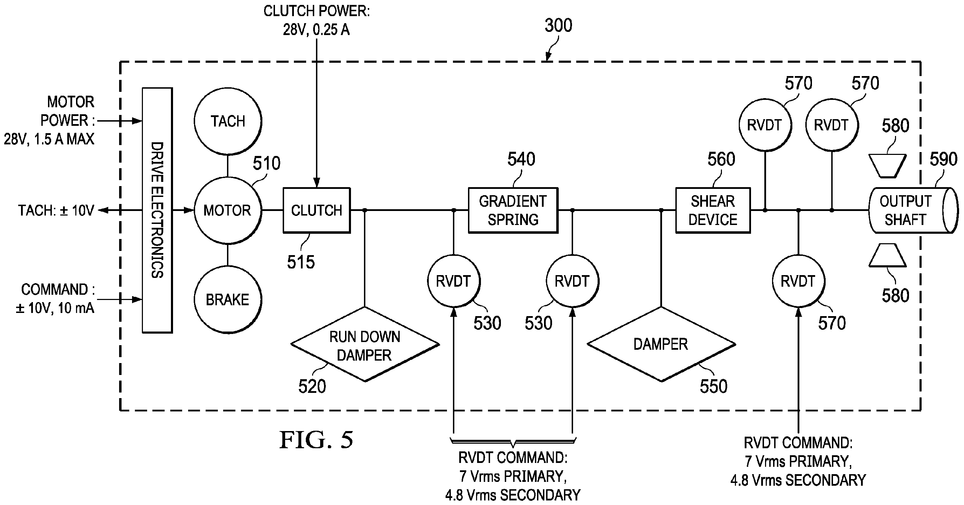

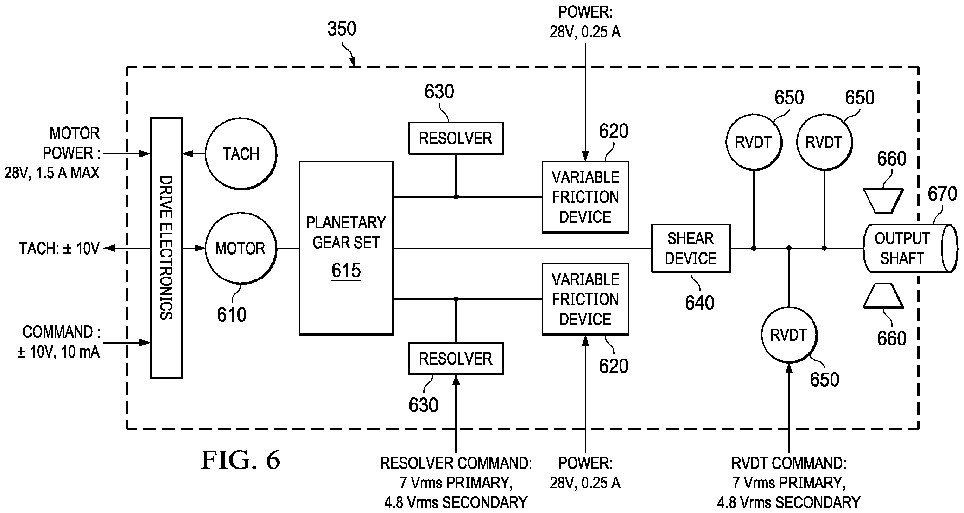

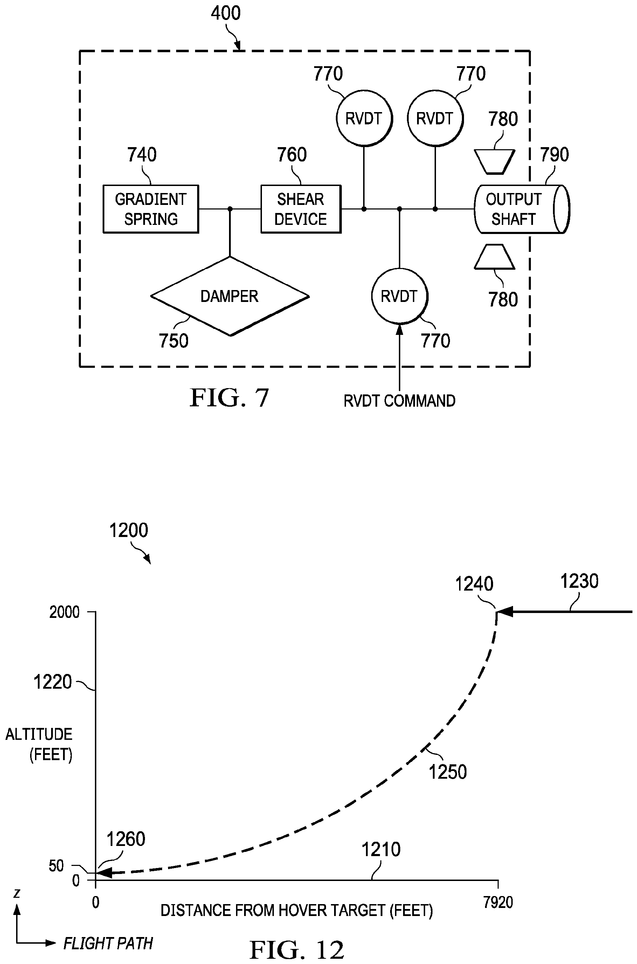

Fig. 5, Fig. 6, and Fig. 7 show the trim assemblies (300, 350, 400) of Fig. 3 and Fig. 4 according to a representative embodiment. Fig. 5 shows cyclic trim assembly 300 according to an embodiment, Fig. 6 shows collective trim assembly 350 according to an embodiment, and Fig. 7 shows anti-torque trim assembly 400.

Fig. 5 representatively illustrates an embodiment of cyclic trim assembly 300 having a trim motor 510, a clutch 515, a run-down damper 520, position measurement devices 530, a gradient spring 540, a damper 550, a shear device 560, position measurement devices 570, mechanical stop devices 580, and an output shaft 590. Although output shaft 590 may be described as a single shaft, it will be appreciated that output shaft 590 may have multiple components. For example, output shaft 590 may include two shafts separated by gradient spring 540. In another example, output shaft 590 may have a single shaft with a torsion spring attached thereto.

In operation , output shaft 590 and cyclic control assemblies 262 are in mechanical communication such that movement of a pilot control assembly (PCA) grip results in movement of output shaft 590, and movement of output shaft 590 likewise results in movement of the PCA grip. Movement of output shaft 590 may be measured or otherwise determined by position measurement devices 530 and 570. The measurements from measurement devices 530 and 570 may be used to instruct rotor system 110 to change the position of main rotor blades 120.

Cyclic trim assembly 300 may operate in three modes of operation. In a first mode of operation, clutch 515 is engaged and trim motor 510 drives output shaft 590. This first mode of operation may represent, for example, operation of cyclic trim assembly 300 during auto-pilot operations. In this example, trim motor 510 may drive movement of output shaft 590 to drive movement of the PCA grip of cyclic control assembly 262. Position measurement devices 530 and 570 may also measure how trim motor 510 drives output shaft 590 and communicate these measurements to rotor system 110.

In a second mode of operation, clutch 515 is disengaged and the pilot drives output shaft 590 by way of cyclic control assembly 262. In this example, the pilot changes the position of output shaft 590, which may be measured by position measurement devices 530 and 570. Position measurement devices 530 and 570 may measure how the pilot drives output shaft 590 and communicate these measurements to rotor system 110.

In a third mode of operation, clutch 515 is engaged and trim motor 510 holds its output arm at a trim position to provide a ground point for output shaft 590. In this example, the pilot may change the position of output shaft 590 about the trim position set by trim motor 510. When the pilot releases the PCA grip, the PCA grip may move to the trim position corresponding to the position established by trim motor 510. In some embodiments, the first and third modes of operations may be combined such that trim motor 510 moves the trim position during operation.

Thus, trim motor 510 may provide cyclic force (or trim) to cyclic control assembly 262 through output shaft 590. In an embodiment, trim motor 510 may be a 28 volt DC permanent magnet motor. In operation, trim motor 510 may provide an artificial-force feel (or "force feedback") for a flight control system (FCS) about an anchor point (or "detent"). Clutch 515 provides a mechanism for engaging and disengaging trim motor 510.

Fig. 6 shows an embodiment of collective trim assembly 350 having a trim motor 610, planetary gear set 615, variable friction devices 620, resolvers 630, shear device 640, position measurement devices 650, mechanical stop devices 660, and output shaft 670. Output shaft 670 may be coupled to various linkages. Although output shaft 670 may be described as a single shaft, it will be appreciated that output shaft 670 may comprise multiple components or pieces.

Output shaft 670 and collective control assemblies 264 are in mechanical communication such that movement of a PCA grip of the collective control results in movement of output shaft 670, and movement of output shaft 670 likewise results in movement of the PCA grip of the collective control. Movement of output shaft 670 may be measured or otherwise determined by position measurement devices 650. Measurements from measurement devices 650 may be used to instruct rotor system 110, *e.g.,* as to how to change the position of main rotor blades 120.

Collective trim assembly 350 may operate in three modes of operation. In a first mode of operation, variable friction devices 620 are engaged and trim motor 610 drives output shaft 670. This first mode of operation may represent, for example, operation of collective trim assembly 350 during auto-pilot operations. In this example, trim motor 610 may drive movement of output shaft 670 to drive movement of the PCA grip of collective control assembly 264. Position measurement devices 650 may also measure how trim motor 610 drives output shaft 670 and communicate these measurements to rotor system 110.

In a second mode of operation, variable friction devices 620 are disengaged and the pilot drives output shaft 670 by way of collective control assembly 264. In this example, the pilot changes the position of output shaft 670, which may be measured or otherwise determined by position measurement devices 650. Position measurement devices 650 may measure or otherwise determine how the pilot drives output shaft 670 and communicate these measurements to rotor system 110.

In a third mode of operation, variable friction devices 620 are engaged and trim motor 610 holds its output arm at a trim position to provide a ground point for output shaft 670. In this example, the pilot may change the position of output shaft 670 about the trim position set by trim motor 610. When the pilot releases the PCA grip, the PCA grip may move to the trim position corresponding to the position established by trim motor 610. In some embodiments, the first and third modes of operations may be combined such that trim motor 610 moves the trim position during operation.

Thus, trim motor 610 may provide collective force (trim) to collective control assembly 264 through output shaft 670. In one example embodiment, trim motor 610 may be a 28 volt DC permanent magnet motor. In operation, trim motor 610 may provide an artificial force feel for an FCS about an anchor point. Variable friction devices 620 provide a mechanism for engaging and disengaging trim motor 610.

Fig. 7 shows an anti-torque trim assembly 400 having a gradient spring 740, a damper 750, a shear device 760, position measurement devices 770, mechanical stop devices 780, and output shaft 790. Although output shaft 790 may be described as a single shaft, it will be appreciated that output shaft 790 may comprise multiple pieces or components.

In operation, output shaft 790 and pedal assemblies 266 are in mechanical communication such that movement of the pedals results in movement of output shaft 790, and movement of output shaft 790 likewise results in movement of the pedals. Movement of output shaft 790 may be measured or otherwise determined by position measurement devices 770. Measurements from measurement devices 770 may be used to instruct rotor system 110, *e.g.,* as to how to change the pitch of tail rotor blades 120' (or how to change operation of an alternative anti-torque device or system).

Although cyclic control assembly 262, collective control assembly 264, and pedal assemblies 266 may generally control the cyclic, collective, and anti-torque movements of rotorcraft 100 respectively, generally, aircraft dynamics may result in a coupling of aircraft motions (or flight characteristics). As an example, inputting a change in lateral cyclic into cyclic control assembly 262 may result in a change in the pitch moment of rotorcraft 100. This change in the pitch moment may occur even if no longitudinal cyclic input is provided to cyclic control assembly 262. Rather, this change in the pitch moment would be the result of aircraft dynamics. In such an example, a pilot may apply a counteracting longitudinal cyclic input to compensate for the change in pitch moment. Accordingly, coupling of aircraft flight characteristics generally increases pilot workload.

Different aircrafts may be associated with different couplings of aircraft motions. For example, a rotorcraft with a canted tail rotor may be associated with a high level of coupling due to the "lift" generated by the canted tail rotor combined with normal coupling of yaw motion to collective pitch and coupling of cyclic inputs of conventional single-rotor rotorcraft. In such an example, feedback loops may not be sufficient to compensate for this coupling because feedback loops do not engage until after the coupled response occurs.

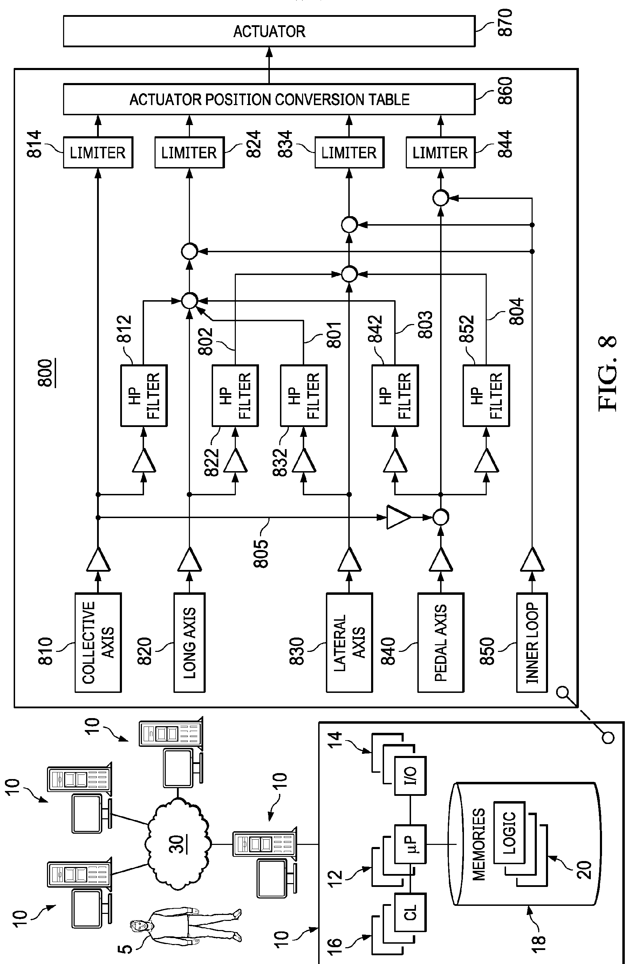

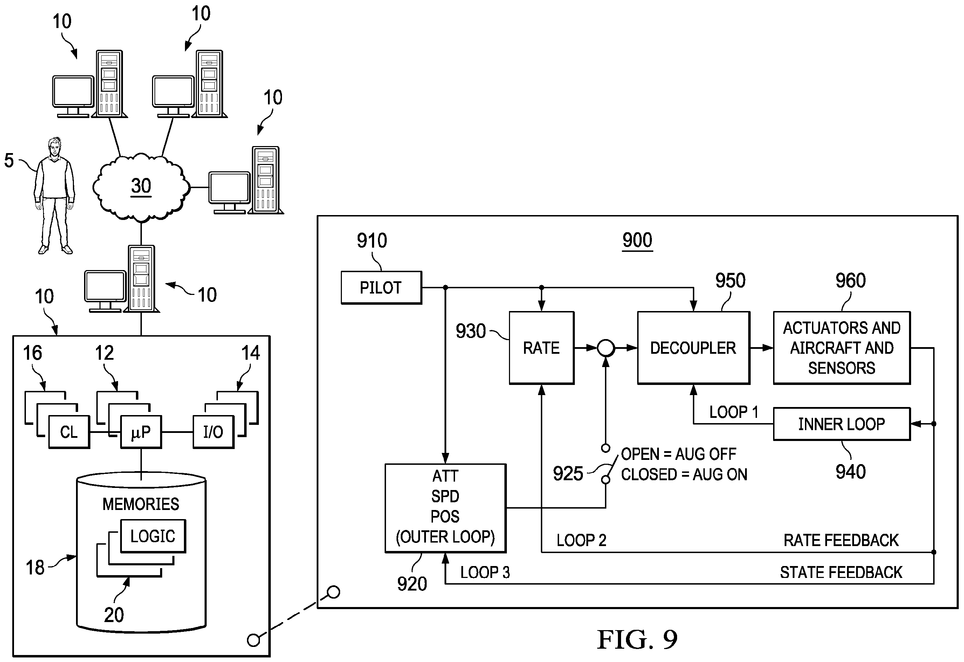

Accordingly, rotorcraft fly-by-wire systems described herein recognize the capability to augment flight control commands with feed-forward control cross-feeds that anticipate inherent coupling of aircraft motions. Fig. 8 shows a fly-by-wire cross-feed arrangement 800. As shown in Fig. 8, cross-feed arrangement 800 has five inputs: collective axis input 810, longitudinal cyclic axis input 820, lateral cyclic axis input 830, pedal axis input 840, and inner loop input 850. Examples of inner loop input 850 will be discussed later with regard to description of Fig. 9.

As representatively illustrated in Fig. 8, each input may be cross-fed to a different axis. In some examples, high-pass filters (*e.g.,* high-pass filters 812, 822, 832, 842, and 852) may be used to filter cross-feed signals by allowing high-frequency signals to pass, but attenuating frequencies lower than a cut-off frequency. Fixed gains are applied to the inputs before passing through the high-pass filters. The cross-feed signals may then be passed through a limiter (*e.g.,* limiter 814, 824, 834, or 844) to an actuator position converter 860, which processes the signals and converts them into instructions for one or more actuators 870. Each actuator 870 may represent any device that provides flight control inputs to a flight control device. Examples of actuators 870 may include, but are not limited to, a swashplate actuator, a pitch-link actuator, an on-blade actuator, or the like.

The example of Fig. 8 has five representative cross-feeds. A first cross-feed 801 is a lateral cyclic to longitudinal cyclic cross-feed based on providing longitudinal cyclic to cancel the pitch moment generated by a change in lateral cyclic. A second cross-feed 802 is a longitudinal cyclic to lateral cyclic cross-feed based on providing lateral cyclic to cancel the roll moment generated by a change in longitudinal cyclic. A third cross-feed 803 is a pedal axis (*e.g.,* tail rotor collective) to longitudinal cyclic cross-feed based on providing longitudinal cyclic to cancel the pitch moment of the tail rotor collective. A fourth cross-feed 804 is a tail rotor collective to lateral cyclic cross-feed based on providing lateral cyclic to cancel the roll moment of, *e.g.,* the tail rotor collective. A fifth cross-feed 805 is a main rotor collective to tail rotor collective cross-feed based on providing tail rotor collective to cancel the yaw moment of the main rotor collective.

Although Fig. 8 is representatively illustrated with five cross-feeds, more, fewer, or different cross-feed arrangements may be utilized. In general, cross-feeds may be utilized whenever a pilot provides a command to change a first flight characteristic, where changing the first flight characteristic would result in an expected change to a second flight characteristic. The cross-feed may result in an instruction to change a first operating condition of the FCS in response to a received pilot command, and an instruction to change a second operating condition in response to the expected change to the second flight characteristic. This second instruction could at least partially offset, counteract, or otherwise address the expected change to the second flight characteristic.

Representative embodiments appreciate that applying cross-feeds to "decouple" an aircraft having coupled flight dynamics may reduce pilot workload by automatically applying cross-feed commands without pilot intervention. For example, in some embodiments, applying decoupling cross-feeds may reduce or eliminate the need for a pilot to apply commands through pilot controls that are intended to at least partially offset coupled motions of the aircraft. In some circumstances, the FCS may apply cross-feed inputs faster than a pilot could manually. For example, the cross-feeds may anticipate (and therefore more quickly address) inherently coupled aircraft motions or flight characteristics.

Cyclic control assembly 262 may be configured to operate as a displacement-trim device such that movements of the longitudinal stick correlate to the position of the swashplate. In such an example, applying cross-feeds to anticipate inherent coupling of aircraft motions may result in the stick position failing to accurately represent a position of the swashplate, unless or until the trim motor back-drives the pilot control device to match swashplate position. Continuously driving the stick, especially at high frequency due to aircraft dynamics, however, may increase workload of the pilot trim system and may increase pilot fatigue by transferring transient motions of the swashplate to the pilot's hand and forcing the pilot's hand to follow the stick as the swashplate moves.

Accordingly, teachings of representative embodiments recognize capabilities to wash out cross-feeds over short periods of time such that a displacement-trim flight control device substantially reflects the position of the swashplate during steady-state flight, but does not reflect the position of the swashplate during short transient periods. For example, the trim motor may drive the stick in certain conditions (*e.g.,* during auto-pilot-controlled flight or establishing a new trim position), but the FCC may be configured to not command the trim motor to move the pilot control stick in response to application of the cross-feed. In some embodiments, the FCC may be configured to command the motor to move the pilot control stick based on positions of the swashplate during steady-state conditions, and may be configured to not command the motor to move the pilot control stick during transitory conditions.

The wash-out time period may be less than about ten seconds (*e.g.,* about 2-7 seconds). In some embodiments, a wash-out time period begins when the cross-feed is first applied. In other embodiments, a wash-out time period begins after the aircraft returns to steady-state. In some embodiments, the aircraft returns to a same steady-state condition as existing before the cross-feed was applied. In other embodiments, a new steady-state condition may be established after the cross-feed is applied.

Elements of cross-feed arrangement 800 may be implemented at least partially by one or more computer systems 10. All, some, or none of the components of cross-feed arrangement 800 may be located on or near an aircraft, such as rotorcraft 100.

Users 5 may access cross-feed arrangement 800 through computer systems 10. For example, in some embodiments, users 5 may provide flight control inputs that may be processed using a computer system 10. Users 5 may include any individual, group of individuals, entity, machine, or mechanism that interacts with computer systems 10. Examples of users 5 include, but are not limited to, a pilot, a copilot, a service person, an engineer, a technician, a contractor, an agent, an employee, or the like. Users 5 may be associated with an organization. An organization may include any social arrangement that pursues collective goals. One example of an organization is a business. A business may include an organization designed to provide goods or services, or both, to consumers, governmental entities, or other businesses.

Computer system 10 may include processors 12, input/output devices 14, communications links 16, and memory 18. In other embodiments, computer system 10 may include more, less, or other components. Computer system 10 may be operable to perform one or more operations of various embodiments. Although representatively illustrated embodiments illustrate one example of computer system 10 that may be used, other embodiments may utilize computers other than computer system 10. Other embodiments may employ multiple computer systems 10 or other computers networked together in one or more public or private computer networks, such as one or more networks 30.

Processors 12 represent devices operable to execute logic contained within a computer-readable medium. Examples of processor 12 include one or more microprocessors, one or more applications, virtual machines, or other logic. Computer system 10 may include one or multiple processors 12.

Input/output devices 14 may include any device or interface operable to enable communication between computer system 10 and external components, including communication with a user or another system. Example input/output devices 14 may include, but are not limited to, a mouse, a keyboard, a display, a printer, or the like.

Network interfaces 16 may be operable to facilitate communication between computer system 10 and another element of a network, such as other computer systems 10. Network interfaces (communications link 16) may connect to any number or combination of wireline or wireless networks suitable for data transmission, including transmission of communications.

Memory 18 represents any suitable storage mechanism and may store any data for use by computer system 10. Memory 18 may comprise one or more tangible, computer-readable, or computer-executable storage medium, and may be a non-transitory computer readable medium storing a program having instructions . In some embodiments, memory 18 stores logic 20. Logic facilitates operation of computer system 10. Logic 20 may include hardware, software, or other logic. Logic 20 may be encoded in one or more tangible, non-transitory media and may perform operations when executed by a computer. Logic 20 may include a computer program, software, computer executable instructions, or instructions capable of being executed by computer system 10.

Various communications between computers 10 or components of computers 10 may occur across a network, such as network 30. Network 30 may represent any number and combination of networks suitable for data transmission. Network 30 may, for example, communicate internet protocol packets, frame relay frames, asynchronous transfer mode cells, or other suitable data between network addresses. Although representatively illustrated embodiments show one network 30, other embodiments may include more or fewer networks. Not all elements comprising various network embodiments may communicate via a network. Representative aspects and implementations will appreciate that communications over a network is one example of a mechanism for communicating between parties, and that any suitable mechanism may be used.

Fig. 9 representatively illustrates a three-loop FCS 900 according to an embodiment. Like cross-feed arrangement 800 of Fig. 8, elements of three-loop FCS 900 may be implemented at least partially by one or more computer systems 10. All, some, or none of the components of three-loop FCS 900 may be located on or near an aircraft such as rotorcraft 100.

The three-loop FCS 900 of Fig. 9 has pilot input 910, outer loop 920, rate (middle) loop 930, inner loop 940, decoupler 950, and aircraft equipment 960. Examples of inner loop 940 and decoupler 950 may include, but are not limited to, cross-feed arrangement 800 and inner loop 850 of Fig. 8. Representative examples of aircraft equipment 960 may include, but are not limited to, actuator position converter 860 and actuators 870 of Fig. 8.

In the example of Fig. 9, a three-loop design separates the inner stabilization and rate feedback loops from outer guidance and tracking loops. The control law structure primarily assigns the overall stabilization task to inner loop 940. Next, middle loop 930 provides rate augmentation. Outer loop 920 focuses on guidance and tracking tasks. Since inner loop 940 and rate loop 930 provide most of the stabilization, less control effort is required at the outer loop level. As representatively illustrated in Fig. 9, switch 925 is provided to turn third-loop flight augmentation on and off.

The inner loop and rate loop include a set of gains and filters applied to roll/pitch/yaw 3-axis rate gyro and acceleration feedback sensors. Both the inner loop and rate loop may stay active, independent of various outer loop hold modes. Outer loop 920 may include cascaded layers of loops, including an attitude loop, a speed loop, a position loop, a vertical speed loop, an altitude loop, and a heading loop.

The sum of inner loop 940, rate loop 930, and outer loop 920 are applied to decoupler 950. Decoupler 950 approximately decouples the 4-axes (pitch, roll, yaw, and collective pitch (vertical)) such that, for example, forward longitudinal stick input does not require the pilot to push the stick diagonally for manual deconvolution. Similarly, as collective pull increases torque and results in an increased anti-torque requirement, decoupler 950 may provide both the necessary pedal and a portion of cyclic (e.g., if rotorcraft 100 has a canted tail rotor) to counter increased torque.

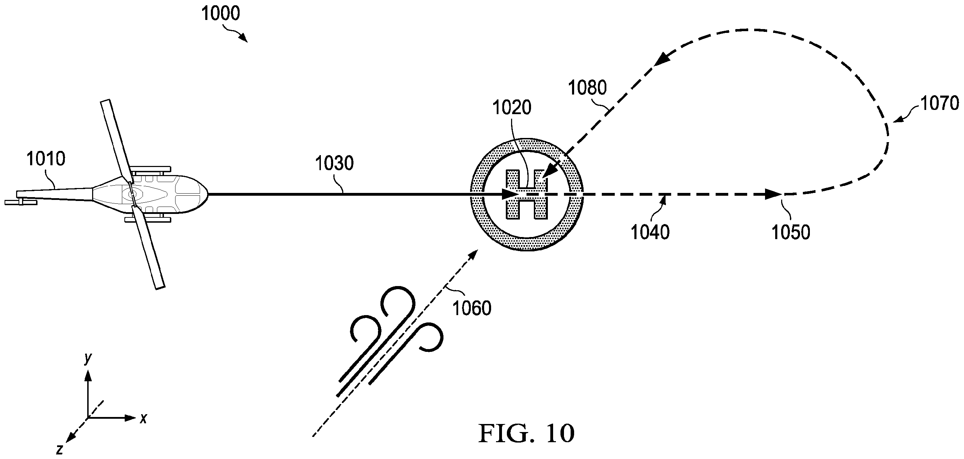

In accordance with representative embodiments, decoupling of plural flight characteristics allows for a control-law -automated, -mediated, or at least -assisted change in pitch angle, roll angle, yaw rate, or collective pitch angle, *e.g.,* attending performance an approach-to-hover maneuver. As representatively illustrated in Fig. 10, a rotorcraft fly-by-wire control law system in accordance with various representative aspects may be employed to augment flight characteristics of rotorcraft 100 using control operations of the FCC and FCS to perform a return-to-target (RTT) maneuver 1000.

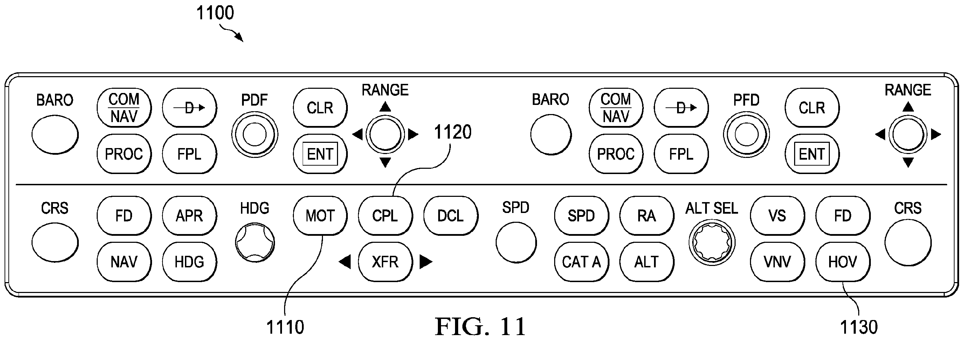

In a representative embodiment, rotorcraft 1010 may be engaged in forward flight on heading 1030 to approach target location 1020. As rotorcraft 1010 passes over target location 1020, target location 1020 is marked (*e.g.,* by pilot depressing mark-on-target (MOT) button 1110 of Flight Director (FD) mode panel 1100; see discussion of Fig. 11 that follows). Rotorcraft 1010 then proceeds to overfly marked target location 1020 on heading 1040. At RTT engagement location 1050, rotorcraft 1010 receives a command to engage an automated RTT procedure (*e.g.,* by pilot depressing hover (HOV) button 1130 of FD mode panel 1100; see discussion of Fig. 11 that follows). In accordance with representative embodiments, the system is configured to alter heading/track, velocity, and altitude in performance of the RTT procedure.

The RTT procedure begins with one or more sensors and the flight management system (FMS) measuring or otherwise determining wind direction 1060. The FMS then determines a downwind direction relative to prevailing wind direction 1060. The FCC and avionics system then computes an RTT route to return rotorcraft 1010 to marked target location 1020 in an upwind approach. Control laws (CLAWS) of the FCC of rotorcraft 1010 are then employed to turn 1070 rotorcraft 1010 downwind. After turn 1070, the FCC employs CLAWS to place rotorcraft 1010 in descent on heading 1080 to return rotorcraft 1010 to, and hover over, marked target location 1020. In a representative embodiment, automated vertical descent may be engaged at RTT engagement location 1050 and continue through turn 1070 and on heading 1080. In other embodiments, FCC automated vertical descent may be engaged in some portion of, or after completing, turn 1070, with continued descent on heading 1080.

In a representative aspect, the FCC may be configured to continuously, or at least iteratively, measure or otherwise determine a position error (*e.g.,* from global positioning system (GPS) data or other location/position sensor data) of rotorcraft 1010 on the RTT flight path, and compute adjustments to the RTT flight path for returning rotorcraft 1010 to marked target location 1020. In another representative aspect, rotorcraft 1010 hovers 15.24 m (50 feet) above marked target location 1020 at conclusion of the automated RTT approach-to-hover maneuver. It will be appreciated, however, that altitudes greater than or less than 15.24 m (50 feet) may be employed as a hover altitude above marked target location 1020. In further representative aspects, duration of the approach-to-hover maneuver may be between about 2 minutes and about 3 minutes. It will be appreciated, however, that other periods of time greater than 3 minutes or less than 2 minutes may be employed as a duration of performance of the approach-to-hover maneuver. Deceleration rate and vertical rate of descent will be described with reference to discussion of Fig. 12 that follows.

As representatively illustrated in Fig. 11, FD mode panel 1100 comprises MOT button 1110, couple (CPL) button 1120, and HOV button 1130. In an embodiment, as rotorcraft 1010 passes over target location 1020, target location 1020 is marked by pilot depressing MOT button 1110 of FD mode panel 1100. When the pilot depresses MOT button 1110, "RTT" is annunciated in the FD armed mode fields on the primary flight display (PFD) (*e.g.,* for all three axes: collective, pitch, roll). Marked target location 1020 may be marked on a displayed map with distance to marked target location 1020 indicated. As progress is made along the RTT flight path, the indication of distance may be continuously, or at least iteratively, updated for refreshed display.

In a representative embodiment, distance to marked target location 1020 may be measured or otherwise determined based on a difference between GPS values (*e.g.,* between a first GPS location of marked target location 1020 and a second GPS location of rotorcraft 1010). In other embodiments, distance to marked target location 1020 may be alternatively or conjunctively measured, or otherwise determined, based on a laser range-finding measurement, an interferometric measurement, or the like. An approximate distance to marked target location 1020 may be displayed visually, for example, on a moving map of an avionics display. Distance to marked target location 1020 may also be displayed as a component of a graphic flight plan presentation. At some point in the flight path, marked target location 1020 may become the "next waypoint" of the flight plan, and may be visually displayed as such (*e.g.,* in a banner of the moving map).

In a representative aspect, target location 1020 is marked by recording, logging, or otherwise identifying GPS data associated with target location 1020. In other representative aspects, target location 1020 may be marked by "painting" or illuminating target location 1020 with a laser or other electromagnetic beam (*e.g.,* a forward-looking infrared (FLIR) system, or the like). After overflying marked target location 1020, pilot depresses HOV button 1130 of FD mode panel 1100 to engage RTT. If the FCS is already coupled to the FD (*e.g.,* in the prior FD mode), the FCC operating in conjunction with CLAWS and the FCS will initiate turn 1070 toward the downwind leg of the RTT flight path. If the FCS is not already coupled to the FD, then the pilot may select CPL button 1120 of FD mode panel 1100 to couple the FCS to the FD and engage the RTT flight path.

In a representative embodiment, when the pilot depresses HOV button 1130, the flight mode annunciation banner of the PFD may show "RTT" in the active mode fields (*e.g.,* for all three axes: collective, pitch, roll). Conjunctively or alternatively, other collective, pitch, or roll guidance cues may be displayed to the pilot for flight path visual guidance. For example, if enabled, the PFD may display Highway in the Sky (HITS) boxes providing a three-dimensional representation of the RTT flight path. As rotorcraft 1010 nears marked target location 1020, a target hover position may be shown on a hover display, *e.g.,* in a portion of the PFD. Alternatively or conjunctively, a target hover position may be shown in a horizontal situation indicator (HSI) overlay. In a representative aspect, the system may continue to annunciate RTT mode (as opposed to transitioning to HOV mode) upon reaching and maintaining hover over marked target location 1020.

Fig. 12 illustrates a vertical descent profile 1200 along the flight path representatively shown in Fig. 10, in accordance with a representative embodiment. The horizontal axis plots distance between marked target location 1020 and rotorcraft 1010 over a representative range of about 2414 m (7920 feet /about 1.5 miles) to about 0 (zero) m (0 feet) (*i.e.,* the hover location). The vertical axis plots altitude in feet between about 609.6 m (2000 feet) and about 15.24 m (50 feet) (*i.e.,* hover altitude). In a representative embodiment, rotorcraft 1010 approaches target location 1020 at a substantially constant initial altitude 1230. It will be appreciated that various other initial altitudes greater than or less than 609.6 m (2000 feet) may be alternatively employed. In accordance with representative aspects, target location 1020 may be marked and overflown at initial altitude 1230. At descent engagement altitude 1240, rotorcraft 1010 either engages the RTT flight path, or has completed the downwind turn of the RTT flight path. Concurrent with or attendant to computing the RTT route, the FCC and avionics system computes a vertical speed of descent and deceleration rate.

In a representative embodiment, one or more sensors measures or otherwise determines groundspeed of rotorcraft 1010. The FCC and avionics system computes a deceleration rate based on groundspeed and then-current distance to marked target location 1020. For example, vertical descent path 1250 representatively illustrates a substantially smooth descent profile corresponding to a function of decreasing altitude based on a square root of the distance between rotorcraft 1010 and marked target location 1020. In a representative aspect, a deceleration rate may be at least partly based on the square root of distance to marked target location 1020. In a representative concurrent or conjunctive embodiment, a vertical speed of descent may be at least partly based on the square root of distance to marked target location 1020. For example, a desired vertical descent speed and deceleration rate may be substantially simultaneously computed - *e.g.,* both based on the square root of distance between rotorcraft 1010 and marked target location 1020. In representative aspects, the vertical descent speed and deceleration rate may be continuously, or at least iteratively adjusted while accounting for position error of rotorcraft 1010.

Rotorcraft 1010 follows vertical descent path 1250 until reaching hover altitude 1260, (*e.g.,* about 15.24 m (50 feet) above marked target location 1020). Accordingly, representative embodiments permit a descent profile to be computed and engaged without requiring evaluation of threshold criteria. In representative aspects, determination of the descent profile does not include "if/then" threshold evaluation (*e.g.,* velocity threshold, altitude threshold, or the like). For example, in representative aspects, the approach-to-hover maneuver does not include "if/then" velocity threshold evaluation or "if/then" altitude threshold evaluation for engagement of the descent profile. Consequently, an advantage of representative embodiments includes improvement of computational efficiency associated with elimination of polling protocols and evaluation of threshold criteria. Rather than having "if/then" statements in code, representative embodiments described herein compute a simplified descent profile and flight path base on distance (*e.g.,* the square root of distance between rotorcraft 1010 and marked target location 1020). In representative implementations, the square root function provides a smooth transition - particularly upon final approach to marked target location 1020. It will be appreciated, however, that various other smoothing functions or profiles, other than those based on a square root of distance between rotorcraft 1010 and marked target location 1020, may be alternatively, conjunctively, or sequentially employed to compute a simplified descent profile that omits "if/then" threshold evaluation.

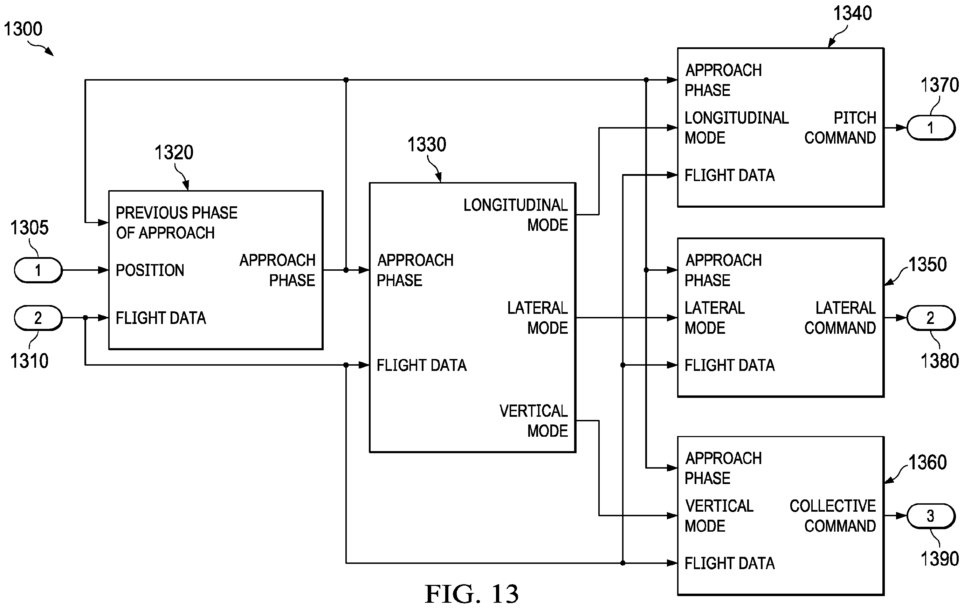

Figure 13 illustrates representative RTT logic 1300 that may be implemented by a system of rotorcraft 100/1010 comprising the FCC. Rotorcraft position/location data 1305, sensor data 1310 (*e.g.,* flight data), and previous approach phase data are provided to RTT logic block 1320. Output of RTT logic block 1320 corresponds to data indicating which phase of the approach-to-hover maneuver that rotorcraft 100/1010 is currently engaging. RTT logic block 1320 provides approach phase data to mode logic block 1330, longitudinal control block 1340, lateral control block 1350, and collective control block 1360. Mode logic block 1330 receives flight data from sensor data 1310, and approach phase data from RTT logic block 1320. Longitudinal mode output is provided from mode logic block 1330 to longitudinal control block 1340. Lateral mode output is provided from mode logic block 1330 to lateral control block 1350. Collective mode output is provided from mode logic block 1330 to collective control block 1360.

Longitudinal control block 1340 operates on approach phase data from RTT logic block 1320, longitudinal mode data from mode logic block 1330, and flight data from sensor data 1310 to produce pitch command 1370. In a representative embodiment, pitch command 1370 is provided by the FCC to the FCS for implementation to affect a CLAWS-automated, -mediated, or at least -assisted increase or decrease in pitch angle attending performance of a component pitch motion of the approach-to-hover maneuver.

Lateral control block 1350 operates on approach phase data from RTT logic block 1320, lateral mode data from mode logic block 1330, and flight data from sensor data 1310 to produce lateral command 1380 (*e.g.,* roll or yaw). In a representative embodiment, lateral command 1380 is provided by the FCC to the FCS for implementation to affect a CLAWS-automated, -mediated, or at least -assisted increase or decrease in roll angle or yaw rate attending performance of a component lateral motion of the approach-to-hover maneuver.

Collective control block 1360 operates on approach phase data from RTT logic block 1320, collective mode data from mode logic block 1330, and flight data from sensor data 1310 to produce collective command 1390. In a representative embodiment, collective command 1390 is provided by the FCC to the FCS for implementation to affect a CLAWS-automated, -mediated, or at least -assisted increase or decrease in collective pitch attending performance of a component collective motion of the approach-to-hover maneuver.

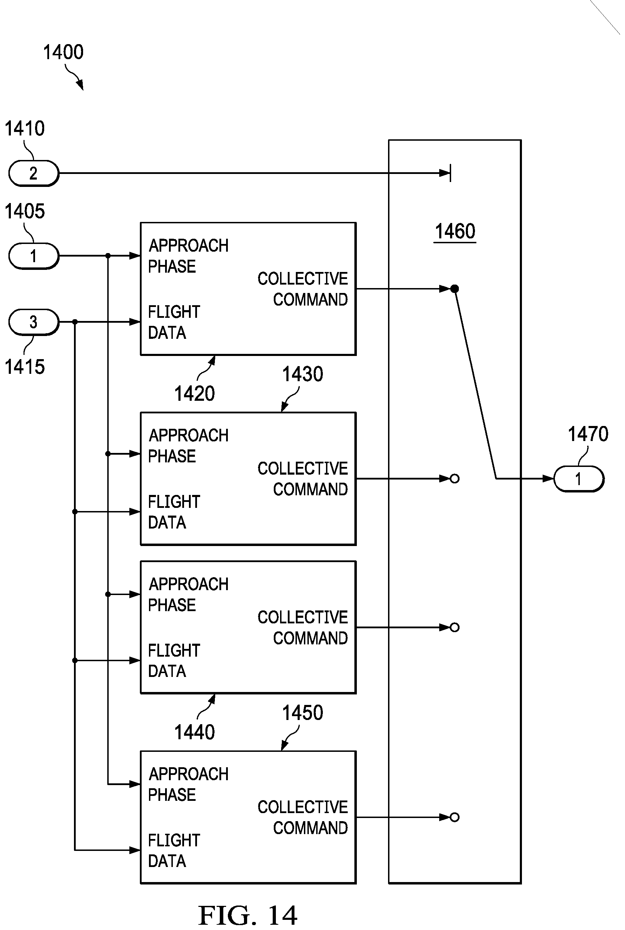

Figure 14 illustrates representative collective mode logic 1400 that may be implemented by a system of rotorcraft 100/1010 comprising the FCC. Approach phase data 1405 and flight data 1415 are provided to barometric altitude hold mode block 1420, radio altitude hold mode block 1430, flight path tracking mode block 1440, and level-off mode block 1450. Collective multiport switch 1460 is suitably configured to allow selection of collective mode 1410, barometric altitude hold mode, radio altitude hold mode, flight path tracking mode, or level-off mode to produce collective command 1470. In a representative embodiment, collective command 1470 is provided by the FCC to the FCS for implementation to affect a CLAWS-automated, -mediated, or at least -assisted increase or decrease in collective pitch attending performance of a component collective motion of the approach-to-hover maneuver corresponding to the mode selected by collective multiport switch 1460.

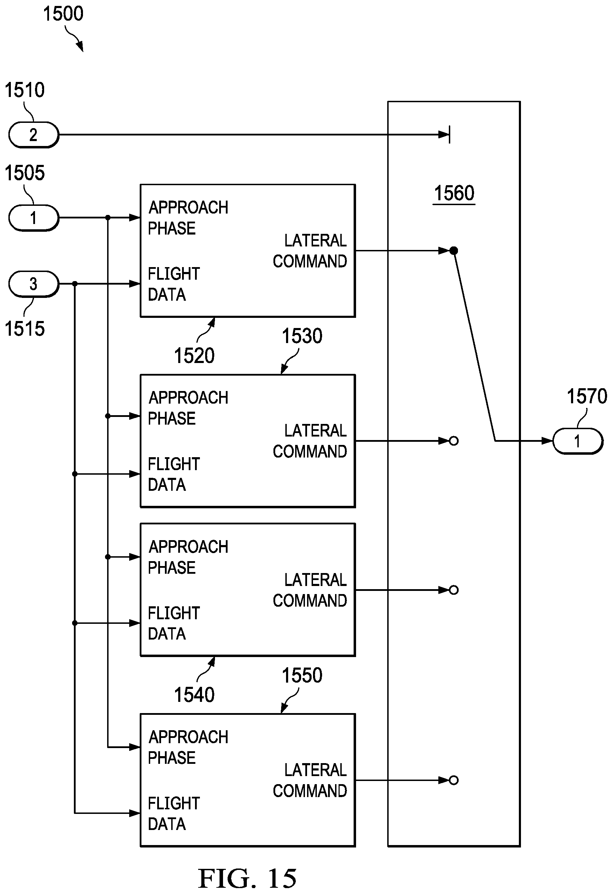

Figure 15 illustrates representative lateral mode logic 1500 that may be implemented by a system of rotorcraft 100/1010 comprising the FCC. Approach phase data 1505 and flight data 1515 are provided to heading/ground track mode block 1520, course tracking mode block 1530, lateral groundspeed mode block 1540, and position hold mode block 1550. Lateral multiport switch 1560 is suitably configured to allow selection of lateral mode 1510, heading/ground track mode, course tracking mode, lateral groundspeed mode, or position hold mode to produce lateral command 1570. In a representative embodiment, lateral command 1570 is provided by the FCC to the FCS for implementation to affect a CLAWS-automated, -mediated, or at least -assisted increase or decrease in roll angle or yaw rate attending performance of a component lateral motion of the approach-to-hover maneuver corresponding to the mode selected by lateral multiport switch 1560.

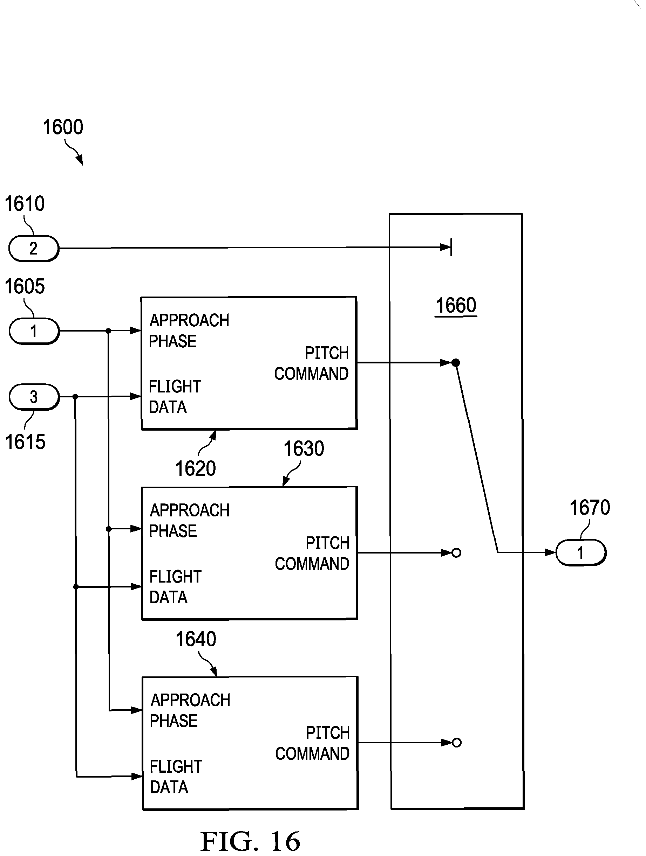

Figure 16 illustrates representative longitudinal mode logic 1600 that may be implemented by a system of rotorcraft 100/1010 comprising the FCC. Approach phase data 1605 and flight data 1615 are provided to airspeed control mode block 1620, decelerate mode block 1630, and groundspeed control mode block 1640. Longitudinal multiport switch 1660 is suitably configured to allow selection of longitudinal mode 1610, airspeed control mode, decelerate mode, or groundspeed control mode to produce longitudinal command 1670. In a representative embodiment, longitudinal command 1670 is provided by the FCC to the FCS for implementation to affect a CLAWS-automated, -mediated, or at least - assisted increase or decrease in pitch attending performance of a component longitudinal motion of the approach-to-hover maneuver corresponding to the mode selected by longitudinal multiport switch 1660.

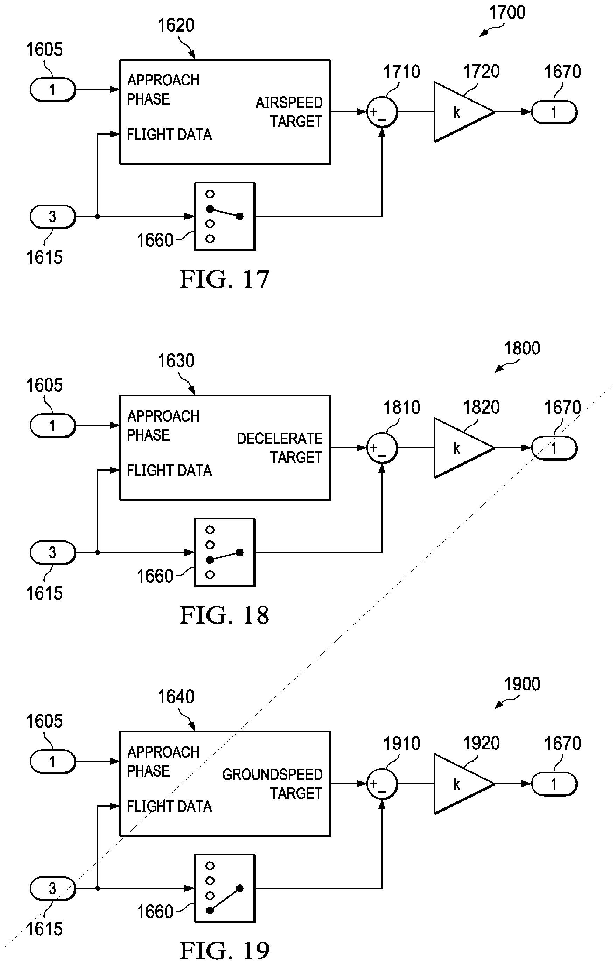

In an embodiment as representatively illustrated in Fig. 17, the FCC and FCS may be configured to engage a forward velocity airspeed control component 1700 of an approach-to-hover maneuver. Approach phase data 1605 and flight data 1615 are provided to airspeed control mode block 1620. Airspeed control mode block 1620 provides target airspeed output to airspeed control comparator 1710. Longitudinal multiport switch 1660 provides mode-selected airspeed flight data to airspeed control comparator 1710. Airspeed control comparator 1710 determines a vector difference between mode-selected airspeed flight data and the desired or computed forward velocity for the then-current approach phase. For example, the absolute value (or magnitude) of the difference between sensed airspeed and desired forward velocity is determined, as well as the sign (or direction) of the difference (*e.g.,* positive indicating acceleration to achieve the desired forward velocity, negative indicating deceleration to achieve the desired forward velocity). Output of airspeed control comparator 1710 is provided to airspeed control gain stage 1720, where *K* indicates a desired acceleration or deceleration. Output from airspeed control gain stage 1720 is provided as longitudinal command 1670. In accordance with this representative embodiment, longitudinal command 1670 is provided by the FCC to the FCS for implementation to affect a CLAWS-automated, -mediated, or at least -assisted increase or decrease in pitch attending performance of a component longitudinal motion of the approach-to-hover maneuver corresponding to selection of airspeed control mode.

In an embodiment as representatively illustrated in Fig. 18, the FCC and FCS may be configured to engage a forward velocity decelerate component 1800 of an approach-to-hover maneuver. Approach phase data 1605 and flight data 1615 are provided to decelerate mode block 1630. Decelerate mode block 1630 provides target airspeed output to decelerate comparator 1810. Longitudinal multiport switch 1660 provides mode-selected airspeed flight data to decelerate comparator 1810. Decelerate comparator 1810 determines a vector difference between mode-selected airspeed flight data and the desired or computed forward velocity for the then-current approach phase. For example, the absolute value (or magnitude) of the difference between sensed airspeed and desired forward velocity is determined, as well as the sign (or direction) of the difference (*e.g.,* positive indicating acceleration to achieve the desired forward velocity, negative indicating deceleration to achieve the desired forward velocity). Output of decelerate comparator 1810 is provided to decelerate gain stage 1820, where *K* indicates a desired acceleration or deceleration. Output from decelerate gain stage 1820 is provided as longitudinal command 1670. In accordance with this representative embodiment, longitudinal command 1670 is provided by the FCC to the FCS for implementation to affect a CLAWS-automated, -mediated, or at least -assisted increase or decrease in pitch attending performance of a component longitudinal motion of the approach-to-hover maneuver corresponding to selection of decelerate mode.

In an embodiment as representatively illustrated in Fig. 19, the FCC and FCS may be configured to engage a forward velocity groundspeed control component 1800 of an approach-to-hover maneuver. Approach phase data 1605 and flight data 1615 are provided to groundspeed control mode block 1640. Groundspeed control mode block 1640 provides target airspeed output to groundspeed control comparator 1910. Longitudinal multiport switch 1660 provides mode-selected groundspeed flight data to groundspeed control comparator 1910. Groundspeed control comparator 1910 determines a vector difference between mode-selected groundspeed flight data and the desired or computed forward velocity for the then-current approach phase. For example, the absolute value (or magnitude) of the difference between sensed groundspeed and desired forward velocity is determined, as well as the sign (or direction) of the difference (*e.g.,* positive indicating acceleration to achieve the desired forward velocity, negative indicating deceleration to achieve the desired forward velocity). Output of groundspeed control comparator 1910 is provided to groundspeed control gain stage 1920, where *K* indicates a desired acceleration or deceleration. Output from groundspeed control gain stage 1920 is provided as longitudinal command 1670. In accordance with this representative embodiment, longitudinal command 1670 is provided by the FCC to the FCS for implementation to affect a CLAWS-automated, -mediated, or at least -assisted increase or decrease in pitch attending performance of a component longitudinal motion of the approach-to-hover maneuver corresponding to selection of groundspeed control mode.

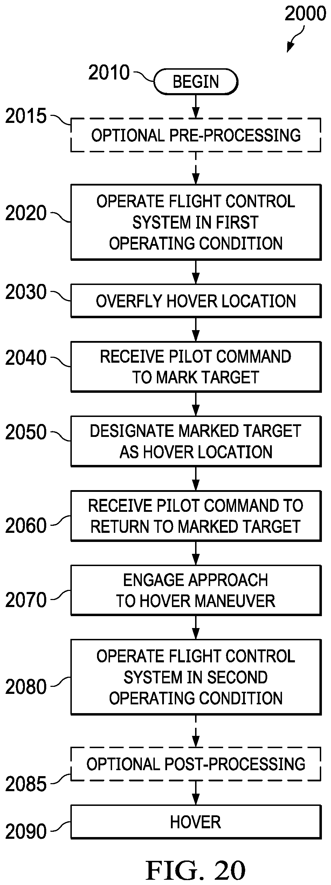

Figure 20 illustrates an approach-to-hover method 2000 in accordance with a representative embodiment. Method 2000 begins 2010 with an optional step 2015 of pre-processing. For example, optional pre-processing 2015 may comprise control laws performing various adjustments preliminary to (or during some portion of) operation of rotorcraft 100 in a first operating condition 2020 of a flight control system (FCS). The rotorcraft has a flight control computer (FCC) in electrical communication with the FCS. Method 2000 further includes a step 2030 of the rotorcraft overflying the hover location. After overflying the hover location, the FCC receives a pilot command to mark a target in step 2040. In response to receiving the pilot command to mark the target, method 2000 further includes a step 2050 of the FCC designating a hover location. After overflying the hover location and marking the target hover location, method 2000 further includes a step 2060 of the FCC receiving a pilot command to return to the target. In response to the pilot command to return to the target, method 2000 further includes a step 2070 of the FCC engaging an approach-to-hover maneuver. In response to the FCC engaging the approach-to-hover maneuver, method 2000 further includes a step 2080 of the FCC transitioning to a second operating condition (or a series or sequence of second operating conditions) of the FCS, wherein the second operating condition (or series of same) is operable to reduce airspeed and reduce altitude attending the rotorcraft approaching the hover location (*e.g.,* 15.24 m (50 feet) over the marked target location). Method 2000 further includes a step 2085 of optional post-processing. For example, optional post-processing 2085 may comprise control laws performing various adjustments during or after operation of rotorcraft 100 in the first operating condition of the FCS. Method 2000 also includes a step 2090 of rotorcraft 100 hovering over the marked target location.

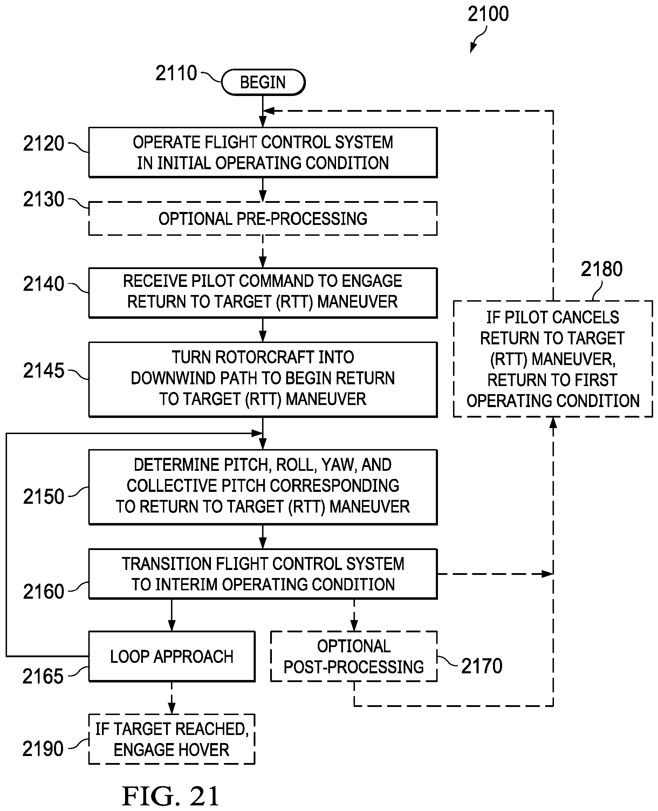

As representatively illustrated in Fig. 21, a method 2100 for implementing an automated, mediated, or at least assisted RTT maneuver in control laws begins 2110 with a step 2120 of operating the FCS of rotorcraft 100 in an initial operating condition. The initial operating condition may be any condition of operating the FCS (*e.g.,* generally regarded as a stable operating condition). For example, the initial operating condition may correspond to rotorcraft 100 engaged in forward flight at relatively constant, non-zero velocity. Step 2130 represents optional pre-processing that the FCC may engage (or be engaged in) preliminary to the FCC receiving a pilot command to engage an RTT maneuver in step 2140. For example, optional pre-processing 2130 may comprise control laws performing various adjustments during operation of rotorcraft 100 in the initial operating condition 2120. After a pilot command to engage an RTT maneuver is received in step 2140, the FCC determines (in step 2145) a pitch angle, roll angle, yaw rate, or collective pitch angle for turning rotorcraft 100 into a downwind path to begin the RTT maneuver. In step 2150, the FCC determines a pitch angle, roll angle, yaw rate, or collective pitch angle for implementation in performance of the RTT maneuver. Thereafter the FCS is transitioned to an interim operating condition in step 2160 (*e.g.,* the interim operating condition corresponding to a component portion of the RTT maneuver for returning rotorcraft 100 to the marked target location). Thereafter, RTT approach processing is looped 2165 to iteratively or sequentially determine pitch angles, roll angles, yaw rates, or collective pitch angles for implementation in performance of subsequent phases of the RTT maneuver. Steps 2150 and 2160 are looped 2165 until cancellation of the RTT maneuver by the pilot in step 2180, or reaching the target location in step 2190. If the target location is reach, rotorcraft is placed in a hover above the target location in step 2190. If the pilot optionally cancels the RTT maneuver, rotorcraft 100 may be optionally returned to the initial operating condition existing prior to engagement of the RTT maneuver. The FCC may engage optional post-processing in step 2170. For example, optional post-processing 2170 may comprise control laws performing various automated control functions.

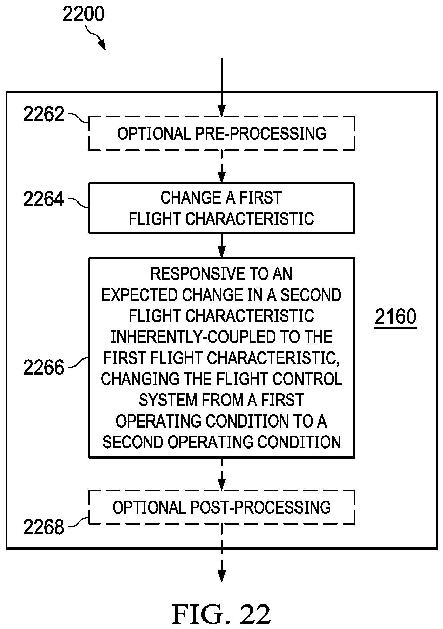

In accordance with a representative method 2200 illustrated in Fig. 22, step 2160 (*see also* Fig. 21) of transitioning the FCS to an interim operating condition includes a step of optional pre-processing 2262. Optional pre-processing 2262 may include the same or similar, or different, elements as optional pre-processing step 2130 of Fig. 21. In step 2264, the FCC makes a change to a first flight characteristic. In step 2266, the FCC changes a prior operating condition of the FCS to a subsequent operating condition of the FCS in correspondence to, in congruence with, or otherwise appreciating, an expected change in a second flight characteristic inherently-coupled to, or convolved with, the first flight characteristic (as previously discussed) in order to counteract or otherwise address the expected change in the second flight characteristic (*e.g.,* main rotor tilt engagement to affect a roll maneuver may require modification of collective pitch). Thereafter optional post-processing may be performed in step 2268. Optional post-processing 2268 may identically include or find correspondence to same or similar, or different, elements as optional post-processing step 2170 of Fig. 21. For example, some or all of optional post-processing 2268 may be a subset of optional post-processing step 2170 of Fig. 21.

An embodiment rotorcraft includes a power train coupled to a body, the power train having a power source and a drive shaft coupled to the power source, a rotor system coupled to the power train and comprising a plurality of rotor blades, a flight control system (FCS) operable to change at least one operating condition of the rotor system, a pilot control assembly (PCA) operable to receive commands from a pilot, where the FCS is a fly-by-wire flight control system in electrical communication with the PCA, and a flight control computer (FCC) in electrical communication between the FCS and the PCA. The FCC is operable to receive a pilot command to mark a target, designate a hover location in response to the pilot command to mark the target, receive a pilot command to return to the target, engage an approach-to-hover maneuver in response to the pilot command to return to the target, and transition to a second operating condition of the rotor system in response to engaging the approach-to-hover maneuver, wherein the second operating condition of the rotor system corresponds to a change in heading, a reduction in airspeed, and a descent in altitude attending the rotorcraft approaching the hover location.

In some embodiments, the FCC is further operable to alter a first flight characteristic, wherein alteration of the first flight characteristic would result in an anticipated change to a second flight characteristic, instruct the FCS to change a first operating condition of the rotor system based on a convolved relationship between the first flight characteristic and the second flight characteristic, and instruct the FCS to transition to the second operating condition of the rotor system in response to the anticipated change to the second flight characteristic, where the second operating condition of the rotor system is operable to at least partially counter the anticipated change to the second flight characteristic such that the FCS is operable to at least partially separate convolved flight characteristics. In some embodiments, the approach-to-hover maneuver is based on a distance between the rotorcraft and the hover location. In some embodiments, the approach-to-hover maneuver is based on a square root of the distance. In some embodiments, the approach-to-hover maneuver includes at least one of an increase or decrease of pitch of the rotorcraft, an increase or decrease of roll of the rotorcraft, an increase or decrease of yaw of the rotorcraft, or an increase or decrease of collective pitch of the rotor system. In some embodiments, the FCC is further operable to maintain the approach-to-hover maneuver until the rotorcraft is located at the hover location or until the FCC receives a pilot command. In some embodiments, the pilot command is received from a cyclic control or a collective control of the PCA. In some embodiments, the FCC is further operable to determine forward airspeed from at least one sensor of the rotorcraft. In some embodiments, the first operating condition comprises the rotorcraft being piloted by an autopilot. In some embodiments, the first operating condition includes the rotorcraft engaged in forward flight with an airspeed greater than 0 knots. In some embodiments, the hover location is about 15.24 m (50 feet) above the target. In some embodiments, the rotor system is at least one of a main rotor system and a tail rotor system.

An embodiment flight control computer (FCC) includes a processor and a non-transitory computer-readable storage medium storing a program to be executed by the processor for implementing a control law. The program includes instructions for performing an approach-to-hover maneuver in response to a pilot command, where the pilot command causes a rotorcraft to return to, and hover above, a marked target location.

In some embodiments, the program further includes instructions for at least one of increasing or decreasing at least one of pitch angle, roll angle, yaw rate, or collective pitch angle. In some embodiments, the program further includes instructions for reducing an airspeed of the rotorcraft, and reducing an altitude of the rotorcraft. In some embodiments, the instructions for reducing the airspeed of the rotorcraft and reducing the altitude of the rotorcraft include instructions for reducing the airspeed of the rotorcraft and reducing an altitude of the rotorcraft according to a distance between the rotorcraft and the marked target location. In some embodiments, the instructions for reducing the airspeed of the rotorcraft and reducing the altitude of the rotorcraft include instructions for reducing the airspeed of the rotorcraft and reducing an altitude of the rotorcraft according a square root of the distance.

An embodiment method includes operating a rotorcraft in a first operating condition of a flight control system (FCS), the rotorcraft having a flight control computer (FCC) in electrical communication between the FCS and a pilot control assembly (PCA), overflying a hover location by the rotorcraft, receiving, by the FCC, a pilot command to mark a target, designating the hover location by the FCC in response to receiving the pilot command to mark the target, receiving, by the FCC, a pilot command to return to the target after overflying the hover location and after designating the hover location, engaging an approach-to-hover maneuver by the FCC in response to the pilot command to return to the target, and transitioning to a second operating condition of the FCS by the FCC in response to the FCC engaging the approach-to-hover maneuver, where the second operating condition is operable to reduce airspeed and reduce altitude attending the rotorcraft approaching the hover location.

In some embodiments, the FCC transitioning to the second operating condition includes changing a first flight characteristic, where changing the first flight characteristic would result in an expected change to a second flight characteristic, and where the first flight characteristic and the second flight characteristic have an inherently-coupled relationship. The FCC transitioning to the second operating condition may further include instructing the FCS to change the first operating condition of the FCS based on the inherently-coupled relationship and instructing the FCS to transition to the second operating condition of the FCS in response to the expected change to the second flight characteristic, where the second operating condition is operable to at least partially offset the expected change to the second flight characteristic such that the FCS is operable to at least partially decouple the inherently-coupled relationship of the first flight characteristic and the second flight characteristic. In some embodiments the method includes at least one of the approach-to-hover maneuver being based on a distance between the rotorcraft and the hover location, a descent profile of the approach-to-hover maneuver is determined based on a square root of the distance, the descent profile includes a vertical speed and a deceleration rate of the rotorcraft, the vertical speed and the deceleration rate are iteratively adjusted based on the square root of the distance as the rotorcraft approaches the hover location, iterative adjustment includes continuously updating a position error, a duration of the approach-to-hover maneuver is between about 2 minutes and about 3 minutes, determining the descent profile is different than using an "if/then" threshold evaluation, the approach-to-hover maneuver does not include an "if/then" velocity threshold evaluation for engaging the descent profile, the approach-to-hover maneuver does not include an "if/then" altitude threshold evaluation for engaging the descent profile, the approach-to-hover maneuver includes at least one of an increase or decrease of pitch, an increase or decrease of roll, an increase or decrease of yaw, or an increase or decrease of collective pitch, the FCC is further operable to maintain the approach-to-hover maneuver until the rotorcraft is located at the hover location or until the FCC receives a pilot command, the pilot command is received from a cyclic control or a collective control of the PCA, the FCC is further operable to determine forward airspeed from at least one sensor of the rotorcraft, the first operating condition comprises the rotorcraft being piloted by an autopilot, the first operating condition comprises the rotorcraft engaged in forward flight with an airspeed greater than 0 knots, the hover location is about 15.24 m (50 feet) above the target, or the rotorcraft includes at least one of a main rotor system and a tail rotor system.

As used herein, the terms "comprises," "comprising," "includes," "including," "has," "having," or any contextual variant thereof, are intended to reference a non-exclusive inclusion. For example, a process, product, article, or apparatus that comprises a list of elements is not necessarily limited to only those elements, but may include other elements not expressly listed or inherent to such process, product, article, or apparatus. Furthermore, unless expressly stated to the contrary, "or" refers to an inclusive or and not an exclusive or. That is, the term "or" as used herein is generally intended to mean "and/or" unless otherwise indicated. For example, a condition "A or B" is satisfied by any one of the following: A is true (or present) and B is false (or not present), A is false (or not present) and B is true (or present), and both A and B are true (or present). As used herein, a term preceded by "a" or "an" (and "the" when antecedent basis is "a" or "an") includes both singular and plural connotations for such term, unless the context clearly indicates otherwise.

As used herein, the terms "measure," "measuring," measurement," "determining," "determination," "detecting," "detection," "detector," "sensing," "sensor," or contextual variants thereof, refer to functions or device components that assign or otherwise provide an output value for at least one of a direct measurement, an in-direct measurement, or a computed measurement. For example, a determination or detection of an angle between two lines may comprise a direct measurement of the angle between the lines, an indirect measurement of the angle (*e.g.,* as in the case of extending the length of two non-parallel lines outside the area of observation to predict their angle of intersection), or a computed measurement (*e.g.,* using trigonometric functions to calculate an angle). Accordingly, "determining" the angle of intersection may be regarded as equivalent to "detecting" the angle of intersection, and a "detector" for determining the angle may be regarded as directly measuring, indirectly measuring, or computing the angle between the lines.

As previously discussed, representative embodiments of the disclosure may be implemented in a computer communicatively coupled to a network. The network may include, for example, a public network, a private network, the Internet, an intranet, an internet, a wide area network (WAN), a local area network (LAN), a storage area network (SAN), a personal area network (PAN), a metropolitan area network (MAN), a satellite network, a public switched telephone network (PSTN), a cellular network, an optical network, a local network, a regional network, a global network, a wireless network, a wireline network, another computer, a standalone computer, or the like. As is known to those skilled in the art, a computer may include a central processing unit ("CPU") or processor, at least one read-only memory ("ROM"), at least one random access memory ("RAM"), at least one hard disc drive ("HDD"), and one or more input/output ("I/O") devices. I/O devices may include a keyboard, monitor, printer, electronic pointing device (*e.g.,* mouse, trackball, stylus, *etc*.), or the like. In various embodiments, a server computer may have access to at least one database over a network. The database may be local or remote to a server computer.

Additionally, representative functions may be implemented on one computer or shared, or otherwise distributed, among two or more computers in or across a network. Communications between computers may be accomplished using any electronic signals, optical signals, radio frequency signals, or other suitable methods or tools of communication in compliance with network protocols now known or otherwise hereafter derived. It will be understood for purposes of this disclosure that various flight control embodiments may comprise one or more computer processes, computing devices, or both, configured to perform one or more functions. One or more interfaces may be presented that can be utilized to access these functions. Such interfaces include application programming interfaces (APIs), interfaces presented for remote procedure calls, remote method invocation, or the like.

Any suitable programming language(s) can be used to implement the routines, methods, programs, or instructions of embodiments described herein, including; *e.g.,* C, C#, C++, Java, Ruby, MATLAB, Simulink, assembly language, or the like. Different programming techniques may be employed, such as procedural or object oriented ontologies. Any routine can execute on a single computer processing device or multiple computer processing devices, a single computer processor, or multiple computer processors. Data may be stored in a single storage medium or distributed across multiple storage mediums, and may reside in a single database or multiple databases (or other data storage techniques).

Although steps, operations, or computations may be presented in a specific order, this order may be changed in different embodiments. In some embodiments, to the extent multiple steps are shown as sequential in the preceding description, some combination of such steps in alternative embodiments may be performed at a same time. The sequence of operations described herein may be interrupted, suspended, or otherwise controlled by another process, such as an operating system, kernel, daemon, or the like. The routines can operate in an operating system environment or as stand-alone routines. Functions, routines, methods, steps, or operations described herein can be performed in hardware, software, and/or firmware.

Embodiments described herein may be implemented in the form of control logic in software or hardware, or a combination of both. Control logic may be stored in an information storage medium, such as a computer-readable medium, as a plurality of instructions adapted to direct an information processing device to perform a set of steps disclosed in various embodiments.

The embodiments described herein may be implemented, in software, programming, or other steps, operations, methods, routines, or portions thereof, where such software programming or code can be stored in a computer-readable medium and can be operated on by a processor to permit a computer to perform any of the steps, operations, methods, routines, or portions thereof described herein. Embodiments may be implemented using software programming or code in one or more general purpose digital computers, by using, *e.g.,* application specific integrated circuits (ASICs), programmable logic devices, field programmable gate arrays (FPGAs), or optical, quantum, or nano-engineered systems, components, or mechanisms. For example, distributed or networked systems, components, or circuits can be used. In another example, communication or transfer (or otherwise moving from one place to another) of data may be wired, wireless, or accomplished by any other means.

A "computer-readable medium" may be any medium that can contain, store, communicate, propagate, or transport a program for use by or in connection with the instruction execution system, apparatus, system, or device. The computer-readable medium can be, but is not limited to, an electronic, magnetic, optical, electromagnetic, infrared, or semiconductor system, apparatus, system, device, propagation medium, or computer memory. Such computer-readable medium will generally be machine readable and include software programming or code susceptible to being human readable (*e.g.,* source code) or machine readable (*e.g.,* object code).

A "processor" includes any hardware system, mechanism or component that processes data, signals, or other information. A processor can include a system with a general-purpose central processing unit, multiple processing units, dedicated circuitry for achieving functionality, or other systems. Processing need not be limited to a geographic location or have temporal limitations. For example, a processor can perform its functions in "real-time," "offline," in a "batch mode," or the like. Portions of processing may be performed at different (or same) times and at different (or same) locations by different (or same) processing systems.

It will also be appreciated that one or more elements illustrated in the Figures may also be implemented in a more-separated or more-integrated manner, or even removed or rendered inoperable in certain cases, as may be useful in accordance with particular applications and embodiments. Additionally, any signal lines or arrows in the Figures should be considered only as representative, and therefore not limiting, unless otherwise specifically noted.

Examples or illustrations provided herein are not to be regarded in any way as restrictions on, limits to, or express definitions of any term or terms with which they are associated. Instead, these examples or illustrations are to be regarded as being described with respect to a particular embodiment and as merely illustrative. Those skilled in the art will appreciate that any term or terms with which these examples or illustrations are associated will encompass other embodiments that may or may not be given therewith or elsewhere in the specification, and all such embodiments covered by the claims are intended to be included within the scope of that term or terms. Language designating such non-limiting examples and illustrations includes, but is not limited to: "for example," "for instance," *"e.g.," "etc.,* "or the like," "in a representative embodiment," "in one embodiment," "in another embodiment," or "in some embodiments." Reference throughout this specification to "one embodiment," "an embodiment," "a representative embodiment," "a particular embodiment," or "a specific embodiment," or contextually similar terminology, means that a particular feature, structure, property, or characteristic described in connection with the described embodiment is included in at least one embodiment, but may not necessarily be present in all embodiments. Thus, respective appearances of the phrases "in one embodiment," "in an embodiment," or "in a specific embodiment," or similar terminology in various places throughout the description are not necessarily referring to the same embodiment. Furthermore, particular features, structures, properties, or characteristics of any specific embodiment may be combined in any suitable manner with one or more other embodiments as defined by the claims.

The scope of the present disclosure is not intended to be limited to the particular embodiments of any process, product, machine, article of manufacture, assembly, apparatus, means, methods, or steps herein described. As one skilled in the art will appreciate, various processes, products, machines, articles of manufacture, assemblies, apparatuses, means, methods, or steps, whether presently existing or later developed, that perform substantially the same function or achieve substantially similar results in correspondence to embodiments described herein, may be utilized according to their description herein.

Benefits, other advantages, and solutions to problems have been described herein with regard to representative embodiments. However, any benefits, advantages, solutions to problems, or any component thereof that may cause any benefit, advantage, or solution to occur or to become more pronounced are not to be construed as critical, required, or essential features or components.

## Claims

1. A flight control computer (FCC) comprising:
a processor; and
a non-transitory computer-readable storage medium storing a program to be executed by the processor for implementing a control law, the program including instructions to:
receive a first pilot command to designate a marked target (1020) as a hover location as the FCC is flown over the target (1020);
determine, in response to receiving a second pilot command to return to the target (1020), a prevailing wind direction at a present location, and determine a downwind direction according to the prevailing wind direction;
determine, in response to receiving the second pilot command to return to the target (1020), a return-to-target (RTT) route for an approach-to-hover maneuver in an upwind direction determined according to the downwind direction;
performing the approach-to-hover maneuver in response to the pilot command to return to the target (1020), causing a rotorcraft (100) having the FCC to return to, and hover above, a marked target location (1020) according to the RTT route.

2. The FCC of claim 1, wherein the program further includes instructions for at least one of: increasing or decreasing at least one of pitch angle, roll angle, yaw rate, or collective pitch angle.

3. The FCC of claim 2, wherein the program further includes instructions for: reducing an airspeed of the rotorcraft (100); and reducing an altitude of the rotorcraft (100).

4. The FCC of claim 3, wherein the instructions for reducing the airspeed of the rotorcraft (100) and reducing the altitude of the rotorcraft (100) include instructions for reducing the airspeed of the rotorcraft (100) and reducing an altitude of the rotorcraft (100) according to: a distance between the rotorcraft (100) and the marked target location (1020); and optionally or preferably a square root of the distance.

5. A rotorcraft (100), comprising:
a power train coupled to a body, the power train comprising a power source and a drive shaft coupled to the power source;
a rotor system (110) coupled to the power train and comprising a plurality of rotor blades (120);
a flight control system (FCS) (900) operable to change at least one operating condition of the rotor system (110);
a pilot control assembly (PCA) operable to receive commands from a pilot, wherein the FCS (900) is a fly-by-wire flight control system in electrical communication with the PCA; and
the flight control computer (FCC) according to claim 1 in electrical communication between the FCS (900) and the PCA, the FCC operable to:
receive the first pilot command to mark a target (1020) as the marked target (1020) as the rotorcraft (100) overflies the target (1020);
designate the hover location in response to the pilot command to mark the target (1020);
receive the second pilot command to return to the target (1020);
determine, in response to receiving the second pilot command to return to the target (1020), the prevailing wind direction at the present location of the rotorcraft (100), and determine the downwind direction according to the prevailing wind direction
determine, in response to receiving the second pilot command to return to the target (1020), the return-to-target (RTT) route for the approach-to-hover maneuver in an upwind direction determined according to the downwind direction;
engage the approach-to-hover maneuver according to the RTT route in response to the pilot command to return to the target (1020); and
transition to a second operating condition of the rotor system (110) in response to engaging the approach-to-hover maneuver, wherein the second operating condition of the rotor system (110) corresponds to a change in heading, a reduction in airspeed, and a descent in altitude attending the rotorcraft (100) approaching the hover location.

6. The rotorcraft (100) of claim 5, wherein the FCC is further operable to:
alter a first flight characteristic, wherein alteration of the first flight characteristic would result in an anticipated change to a second flight characteristic;
instruct the FCS (900) to change a first operating condition of the rotor system (110) based on a convolved relationship between the first flight characteristic and the second flight characteristic; and
instruct the FCS (900) to transition to the second operating condition of the rotor system (110) in response to the anticipated change to the second flight characteristic, wherein the second operating condition of the rotor system (110) is operable to at least partially counter the anticipated change to the second flight characteristic such that the FCS (900) is operable to at least partially separate convolved flight characteristics.

7. The rotorcraft (100) of claim 6, wherein the approach-to-hover maneuver is based on a distance between the rotorcraft (100) and the hover location; and optionally or preferably, wherein the approach-to-hover maneuver is based on a square root of the distance.

8. The rotorcraft (100) of claim 6 or claim 7, wherein the approach-to-hover maneuver comprises at least one of:
an increase or decrease of pitch of the rotorcraft (100);
an increase or decrease of roll of the rotorcraft (100);
an increase or decrease of yaw of the rotorcraft (100); or
an increase or decrease of collective pitch of the rotor system.

9. The rotorcraft (100) of claim 8, wherein the FCC is further operable to maintain the approach-to-hover maneuver until the rotorcraft (100) is located at the hover location or until the FCC receives a pilot command; and optionally or preferably, wherein the pilot command is received from a cyclic control or a collective control of the PCA.

10. The rotorcraft (100) of any one of claims 6 to 9, wherein the FCC is further operable to determine forward airspeed from at least one sensor of the rotorcraft (100).

11. The rotorcraft (100) of any one of claims 6 to 10, wherein the first operating condition comprises the rotorcraft (100) either:
a) being piloted by an autopilot; and/or
b) engaged in forward flight with an airspeed greater than 0 knots.

12. The rotorcraft (100) of any one of claims 6 to 11, wherein the hover location is about 15.24 meters (50 feet) above the target (1020).

13. The rotorcraft (100 of any one of claims 6 to 12, wherein the rotor system (110) comprises at least one of a main rotor system (110) and a tail rotor system.

14. A method, comprising:
operating a rotorcraft (100) according to claim 6 in a first operating condition of the flight control system (FCS) (900);
overflying the hover location by the rotorcraft (100);
engaging the approach-to-hover maneuver according to the RTT route in response to the second pilot command to return to the target (1020); and
transitioning to the second operating condition of the FCS (900) by the FCC in response to the FCC engaging the approach-to-hover maneuver.

15. The method of claim 14, wherein the FCC transitioning to the second operating condition comprises:
changing a first flight characteristic, wherein changing the first flight characteristic would result in an expected change to a second flight characteristic, and wherein the first flight characteristic and the second flight characteristic have an inherently-coupled relationship;
instructing the FCS (900) to change the first operating condition of the FCS (900) based on the inherently-coupled relationship; and
instructing the FCS (900) to transition to the second operating condition of the FCS (900) in response to the expected change to the second flight characteristic, wherein the second operating condition is operable to at least partially offset the expected change to the second flight characteristic such that the FCS (900) is operable to at least partially decouple the inherently-coupled relationship of the first flight characteristic and the second flight characteristic.

16. The method of claim 15, wherein at least one of:
the approach-to-hover maneuver is based on a distance between the rotorcraft (100) and the hover location;
a descent profile of the approach-to-hover maneuver is determined based on a square root of the distance;
the descent profile comprises a vertical speed and a deceleration rate of the rotorcraft (100);
the vertical speed and the deceleration rate are iteratively adjusted based on the square root of the distance as the rotorcraft (100) approaches the hover location;
iterative adjustment comprises continuously updating a position error;
a duration of the approach-to-hover maneuver is between about 2 minutes and about 3 minutes;
determining the descent profile is different than using an "if/then" threshold evaluation;
the approach-to-hover maneuver does not include an "if/then" velocity threshold evaluation for engaging the descent profile;
the approach-to-hover maneuver does not include an "if/then" altitude threshold evaluation for engaging the descent profile;
the approach-to-hover maneuver comprises at least one of:
an increase or decrease of pitch;
an increase or decrease of roll;
an increase or decrease of yaw; or
an increase or decrease of collective pitch;
the FCC is further operable to maintain the approach-to-hover maneuver until the rotorcraft (100) is located at the hover location or until the FCC receives a pilot command;
the pilot command is received from a cyclic control or a collective control of the PCA;
the FCC is further operable to determine forward airspeed from at least one sensor of the rotorcraft (100);
the first operating condition comprises the rotorcraft (100) being piloted by an autopilot;
the first operating condition comprises the rotorcraft (100) engaged in forward flight with an airspeed greater than 0 knots;
the hover location is about 15.24 meters (50 feet) above the target (1020); or
the rotorcraft (100) comprises at least one of a main rotor system (110) and a tail rotor system.

## Patentansprüche

1. Flugsteuercomputer (FCC), umfassend:
einen Prozessor; und
ein nichtflüchtiges computerlesbares Speichermedium, das ein durch den Prozessor auszuführendes Programm zum Implementieren eines Steuerungsgesetzes speichert, wobei das Programm Anweisungen zu Folgendem umfasst:
Empfangen eines ersten Pilotenbefehls zum Kennzeichnen eines markierten Ziels (1020) als eine Schwebeflugposition, während der FCC über das Ziel (1020) geflogen wird;
Bestimmen, in Reaktion auf Empfangen eines zweiten Pilotenbefehls zum Zurückkehren zu dem Ziel (1020), einer vorherrschenden Windrichtung an einer derzeitigen Position, und Bestimmen einer Rückenwindrichtung gemäß der vorherrschenden Windrichtung;
Bestimmen, in Reaktion auf Empfangen des zweiten Pilotenbefehls zum Zurückkehren zu dem Ziel (1020), einer Route zum Zurückkehren zu dem Ziel (RTT) für ein Manöver zur Annäherung an einen Schwebeflug in einer Gegenwindrichtung, die gemäß der Rückenwindrichtung bestimmt wird;
Durchführen des Manövers zur Annäherung an einen Schwebeflug in Reaktion auf den Pilotenbefehl zum Zurückkehren zu dem Ziel (1020), was einen Drehflügler (100) mit dem FCC veranlasst, zu einer markierten Zielposition (1020) gemäß der RTT-Route zurückzukehren und darüber zu schweben.

2. FCC nach Anspruch 1, wobei das Programm ferner Anweisungen für mindestens eines von Folgendem umfasst: Erhöhen oder Verringern mindestens eines eines Nickwinkels, eines Rollwinkels, eines Gierwinkels oder eines kollektiven Nickwinkels.

3. FCC nach Anspruch 2, wobei das Programm ferner Anweisungen für Folgendes umfasst: Reduzieren einer Fluggeschwindigkeit des Drehflüglers (100); und Reduzieren einer Flughöhe des Drehflüglers (100).

4. FCC nach Anspruch 3, wobei die Anweisungen zum Reduzieren der Fluggeschwindigkeit des Drehflüglers (100) und Reduzieren der Flughöhe des Drehflüglers (100) Anweisungen zum Reduzieren der Fluggeschwindigkeit des Drehflüglers (100) und Reduzieren einer Flughöhe des Drehflüglers (100) gemäß Folgendem umfassen: einem Abstand zwischen dem Drehflügler (100) und der markierten Zielposition (1020); und optional oder vorzugsweise einer Quadratwurzel des Abstands.

5. Drehflügler (100), umfassend:
einen mit einem Rumpf gekoppelten Antriebsstrang, wobei der Antriebsstrang eine Leistungsquelle und eine mit der Leistungsquelle gekoppelte Antriebswelle umfasst;
ein Rotorsystem (110), das mit dem Antriebsstrang gekoppelt ist und eine Mehrzahl von Rotorblättern (120) umfasst;
ein Flugsteuersystem (FCS) (900), das dazu betreibbar ist, mindestens eine Betriebsbedingung des Rotorsystems (110) zu ändern;
eine Pilotensteueranordnung (PCA), die dazu betreibbar ist, Befehle von einem Piloten zu empfangen, wobei das FCS (900) ein Fly-by-Wire-Flugsteuersystem in elektrischer Verbindung mit der PCA ist; und
den Flugsteuercomputer (FCC) nach Anspruch 1 in elektrischer Verbindung zwischen dem FCS (900) und der PCA, wobei der FCC zu Folgendem betreibbar ist:
Empfangen des ersten Pilotenbefehls zum Markieren eines Ziels (1020) als das markierte Ziel (1020), während der Drehflügler (100) das Ziel (1020) überfliegt;
Kennzeichnen der Schwebeflugposition in Reaktion auf den Pilotenbefehl zum Markieren des Ziels (1020);
Empfangen des zweiten Pilotenbefehls zum Zurückkehren zu dem Ziel (1020);
Bestimmen, in Reaktion auf Empfangen des zweiten Pilotenbefehls zum Zurückkehren zu dem Ziel (1020), der vorherrschenden Windrichtung an der derzeitigen Position des Drehflüglers (100), und Bestimmen der Rückenwindrichtung gemäß der vorherrschenden Windrichtung
Bestimmen, in Reaktion auf Empfangen des zweiten Pilotenbefehls zum Zurückkehren zu dem Ziel (1020), der Route zum Zurückkehren zu dem Ziel (RTT) für das Manöver zur Annäherung an einen Schwebeflug in einer Gegenwindrichtung, die gemäß der Rückenwindrichtung bestimmt wird;
Eintreten in das Manöver zur Annäherung an einen Schwebeflug gemäß der RTT-Route in Reaktion auf den Pilotenbefehl zum Zurückkehren zu dem Ziel (1020); und
Übergehen zu einer zweiten Betriebsbedingung des Rotorsystems (110) in Reaktion auf Eintreten in das Manöver zur Annäherung an einen Schwebeflug, wobei die zweite Betriebsbedingung des Rotorsystems (110) einer Änderung des Kurses, einer Reduzierung der Fluggeschwindigkeit und einer Absenkung der Flughöhe, während sich der Drehflügler (100) der Schwebeflugposition annähert, entspricht.

6. Drehflügler (100) nach Anspruch 5, wobei der FCC ferner zu Folgendem betreibbar ist:
Verändern einer ersten Flugcharakteristik, wobei die Veränderung der ersten Flugcharakteristik zu einer voraussichtlichen Änderung einer zweiten Flugcharakteristik führen würde;
Anweisen des FCS (900), eine erste Betriebsbedingung des Rotorsystems (110) basierend auf einer Faltungsbeziehung zwischen der ersten Flugcharakteristik und der zweiten Flugcharakteristik zu ändern; und
Anweisen des FCS (900), zu der zweiten Betriebsbedingung des Rotorsystems (110) in Reaktion auf die voraussichtliche Änderung der zweiten Flugcharakteristik überzugehen, wobei die zweite Betriebsbedingung des Rotorsystems (110) dazu betreibbar ist, der voraussichtlichen Änderung der zweiten Flugcharakteristik zumindest teilweise entgegenzuwirken, so dass das FCS (900) dazu betreibbar ist, gefaltete Flugcharakteristiken zumindest teilweise zu trennen.

7. Drehflügler (100) nach Anspruch 6, wobei das Manöver zur Annäherung an einen Schwebeflug auf einem Abstand zwischen dem Drehflügler (100) und der Schwebeflugposition basiert; und optional oder vorzugsweise wobei das Manöver zur Annäherung an einen Schwebeflug auf einer Quadratwurzel des Abstands basiert.

8. Drehflügler (100) nach Anspruch 6 oder Anspruch 7, wobei das Manöver zur Annäherung an einen Schwebeflug mindestens eines von Folgendem umfasst:
eine Erhöhung oder Verringerung eines Nickens des Drehflüglers (100);
eine Erhöhung oder Verringerung eines Rollens des Drehflüglers (100);
eine Erhöhung oder Verringerung eines Gierens des Drehflüglers (100); oder
eine Erhöhung oder Verringerung eines kollektiven Nickens des Rotorsystems.

9. Drehflügler (100) nach Anspruch 8, wobei der FCC ferner dazu betreibbar ist, das Manöver zur Annäherung an einen Schwebeflug beizubehalten, bis sich der Drehflügler (100) an der Schwebeflugposition befindet oder bis der FCC einen Pilotenbefehl empfängt; und optional oder vorzugsweise wobei der Pilotenbefehl von einer zyklischen Steuerung oder einer kollektiven Steuerung der PCA empfangen wird.

10. Drehflügler (100) nach einem der Ansprüche 6 bis 9, wobei der FCC ferner dazu betreibbar ist, eine Vorwärtsfluggeschwindigkeit von mindestens einem Sensor des Drehflüglers (100) zu bestimmen.

11. Drehflügler (100) nach einem der Ansprüche 6 bis 10, wobei die erste Betriebsbedingung umfasst, dass der Drehflügler (100) entweder:
a) durch einen Autopiloten geflogen wird; und/oder
b) in einen Vorwärtsflug mit einer Fluggeschwindigkeit von mehr als 0 Knoten eingetreten ist.

12. Drehflügler (100) nach einem der Ansprüche 6 bis 11, wobei sich die Schwebeflugposition etwa 15,24 Meter (50 Fuß) über dem Ziel (1020) befindet.

13. Drehflügler (100) nach einem der Ansprüche 6 bis 12, wobei das Rotorsystem (110) mindestens eines eines Hauptrotorsystems (110) und eines Heckrotorsystems umfasst.

14. Verfahren, umfassend:
Betreiben eines Drehflüglers (100) nach Anspruch 6 in einer ersten Betriebsbedingung des Flugsteuersystems (FCS) (900);
Überfliegen der Schwebeflugposition durch den Drehflügler (100);
Eintreten in das Manöver zur Annäherung an einen Schwebeflug gemäß der RTT-Route in Reaktion auf den zweiten Pilotenbefehl zum Zurückkehren zu dem Ziel (1020); und
Übergehen zu der zweiten Betriebsbedingung des FCS (900) durch den FCC in Reaktion darauf, dass der FCC in das Manöver zur Annäherung an einen Schwebeflug eintritt.

15. Verfahren nach Anspruch 14, wobei das Übergehen zu der zweiten Betriebsbedingung durch den FCC Folgendes umfasst:
Ändern einer ersten Flugcharakteristik, wobei Ändern der ersten Flugcharakteristik zu einer erwarteten Änderung einer zweiten Flugcharakteristik führen würde, und wobei die erste Flugcharakteristik und die zweite Flugcharakteristik eine inhärent gekoppelte Beziehung aufweisen;
Anweisen des FCS (900), die erste Betriebsbedingung des FCS (900) basierend auf der inhärent gekoppelten Beziehung zu ändern; und
Anweisen des FCS (900), zu der zweiten Betriebsbedingung des FCS (900) in Reaktion auf die erwartete Änderung der zweiten Flugcharakteristik überzugehen, wobei die zweite Betriebsbedingung dazu betreibbar ist, die erwartete Änderung der zweiten Flugcharakteristik zumindest teilweise zu kompensieren, so dass das FCS (900) dazu betreibbar ist, die inhärent gekoppelte Beziehung der ersten Flugcharakteristik und der zweiten Flugcharakteristik zumindest teilweise zu entkoppeln.

16. Verfahren nach Anspruch 15, wobei mindestens eines von Folgendem zutrifft:
das Manöver zur Annäherung an einen Schwebeflug basiert auf einem Abstand zwischen dem Drehflügler (100) und der Schwebeflugposition;
ein Absenkprofil des Manövers zur Annäherung an einen Schwebeflug wird basierend auf einer Quadratwurzel des Abstands bestimmt;
das Absenkprofil umfasst eine vertikale Geschwindigkeit und eine Verzögerungsrate des Drehflüglers (100);
die vertikale Geschwindigkeit und die Verzögerungsrate werden basierend auf der Quadratwurzel des Abstands iterativ angepasst, während sich der Drehflügler (100) der Schwebeflugposition annähert;
die iterative Anpassung umfasst eine fortlaufende Aktualisierung eines Positionsfehlers;
eine Dauer des Manövers zur Annäherung an einen Schwebeflug liegt zwischen etwa 2 Minuten und etwa 3 Minuten;
das Bestimmen des Absenkprofils unterscheidet sich von einer Verwendung einer "Wenn/Dann"-Schwellenevaluierung;
das Manöver zur Annäherung an einen Schwebeflug umfasst keine "Wenn/Dann"-Geschwindigkeitsschwellenevaluierung für das Eintreten in das Absenkprofil;
das Manöver zur Annäherung an einen Schwebeflug umfasst keine "Wenn/Dann"-Flughöhenschwellenevaluierung für das Eintreten in das Absenkprofil;
das Manöver zur Annäherung an einen Schwebeflug umfasst mindestens eines von Folgendem:
eine Erhöhung oder Verringerung eines Nickens;
eine Erhöhung oder Verringerung eines Rollens;
eine Erhöhung oder Verringerung eines Gierens; oder
eine Erhöhung oder Verringerung eines kollektiven Nickens;
der FCC ist ferner dazu betreibbar, das Manöver zur Annäherung an einen Schwebeflug beizubehalten, bis sich der Drehflügler (100) an der Schwebeflugposition befindet oder bis der FCC einen Pilotenbefehl empfängt;
der Pilotenbefehl wird von einer zyklischen Steuerung oder einer kollektiven Steuerung der PCA empfangen;
der FCC ist ferner dazu betreibbar, eine Vorwärtsfluggeschwindigkeit von mindestens einem Sensor des Drehflüglers (100) zu bestimmen;
die erste Betriebsbedingung umfasst, dass der Drehflügler (100) durch einen Autopiloten geflogen wird;
die erste Betriebsbedingung umfasst, dass der Drehflügler (100) in einen Vorwärtsflug mit einer Fluggeschwindigkeit von mehr als 0 Knoten eingetreten ist;
die Schwebeflugposition befindet sich etwa 15,24 Meter (50 Fuß) über dem Ziel (1020); oder
der Drehflügler (100) umfasst mindestens eines eines Hauptrotorsystems (110) und eines Heckrotorsystems.

## Revendications

1. Ordinateur de contrôle de vol (*flight control computer,* FCC) comprenant :
un processeur ; et
un support de stockage lisible par ordinateur non transitoire stockant un programme à exécuter par le processeur pour mettre en œuvre une loi de contrôle, le programme incluant des instructions pour :
recevoir une première commande de pilote de désigner une cible marquée (1020) en tant qu'emplacement de vol stationnaire lorsque le FCC vole au-dessus de la cible (1020) ;
déterminer, en réponse à la réception d'une deuxième commande de pilote de retourner à la cible (1020), une direction de vent dominante à un emplacement présent, et déterminer une direction dans le sens du vent selon la direction de vent dominante ;
déterminer, en réponse à la réception de la deuxième commande de pilote de retourner à la cible (1020), un itinéraire de retour à la cible (*return-to-target,* RTT) pour une manoeuvre d'approche de vol stationnaire dans une direction contre le vent déterminée selon la direction dans le sens du vent ;
réaliser la manoeuvre d'approche de vol stationnaire en réponse à la commande de pilote de retourner à la cible (1020), amener un giravion (100) ayant le FCC à retourner à, et voler de façon stationnaire au-dessus de, un emplacement de cible marquée (1020) selon l'itinéraire RTT.

2. FCC selon la revendication 1, dans lequel le programme inclut en outre des instructions pour au moins un élément parmi : augmenter ou diminuer au moins un élément parmi un angle de tangage, un angle de roulis, une vitesse de lacet, ou un angle de tangage collectif.

3. FCC selon la revendication 2, dans lequel le programme inclut en outre des instructions pour : réduire une vitesse anémométrique du giravion (100) ; et réduire une altitude du giravion (100).

4. FCC selon la revendication 3, dans lequel les instructions pour réduire la vitesse anémométrique du giravion (100) et réduire l'altitude du giravion (100) incluent des instructions pour réduire la vitesse anémométrique du giravion (100) et réduire une altitude du giravion (100) selon : une distance entre le giravion (100) et l'emplacement de cible marquée (1020) ; et facultativement ou préférablement une racine carrée de la distance.

5. Giravion (100), comprenant :
une puissance de fuselage couplée à un corps, la puissance de fuselage comprenant une source d'alimentation et un arbre d'entraînement couplé à la source d'alimentation ;
un système de rotor (110) couplé à la puissance de fuselage et comprenant une pluralité de pales de rotor (120) ;
un système de contrôle de vol (FCS) (900) pouvant fonctionner pour changer au moins une condition de fonctionnement du système de rotor (110) ;
un ensemble contrôle de pilote (*pilot control assembly,* PCA) pouvant fonctionner pour recevoir des commandes d'un pilote, le FCS (900) étant un système de commandes de vol électriques en communication électrique avec le PCA ; et
l'ordinateur de contrôle de vol (FCC) selon la revendication 1 en communication électrique entre le FCS (900) et le PCA, le FCC pouvant fonctionner pour :
recevoir la première commande de pilote de marquer une cible (1020) en tant que cible marquée (1020) lorsque le giravion (100) survole la cible (1020) ;
désigner l'emplacement de vol stationnaire en réponse à la commande de pilote de marquer la cible (1020) ;
recevoir la deuxième commande de pilote de retourner à la cible (1020) ;
déterminer, en réponse à la réception d'une deuxième commande de pilote de retourner à la cible (1020), la direction de vent dominante à l'emplacement présent du giravion (100), et déterminer la direction dans le sens du vent selon la direction de vent dominante ;
déterminer, en réponse à la réception de la deuxième commande de pilote de retourner à la cible (1020), l'itinéraire de retour à la cible (RTT) pour la manoeuvre d'approche de vol stationnaire dans une direction contre le vent déterminée selon la direction dans le sens du vent ;
aborder la manoeuvre d'approche de vol stationnaire selon l'itinéraire RTT en réponse à la commande de pilote de retourner à la cible (1020) ; et
transitionner vers une deuxième condition de fonctionnement du système de rotor (110) en réponse au fait d'aborder la manoeuvre d'approche de vol stationnaire, la deuxième condition de fonctionnement du système de rotor (110) correspondant à un changement de cap, une réduction de vitesse anémométrique, et une descente en altitude du giravion (100) à l'approche de l'emplacement de vol stationnaire.

6. Giravion (100) selon la revendication 5, dans lequel le FCC peut en outre fonctionner pour :
modifier une première caractéristique de vol, où la modification de la première caractéristique de vol aurait comme résultat un changement anticipé d'une deuxième caractéristique de vol ;
donner instruction au FCS (900) de changer une première condition de fonctionnement du système de rotor (110) sur la base d'une relation convoluée entre la première caractéristique de vol et la deuxième caractéristique de vol ; et
donner instruction au FCS (900) de transitionner vers la deuxième condition de fonctionnement du système de rotor (110) en réponse au changement anticipé de la deuxième caractéristique de vol, la deuxième condition de fonctionnement du système de rotor (110) pouvant fonctionner pour contrarier au moins partiellement le changement anticipé de la deuxième caractéristique de vol de telle sorte que le FCS (900) puisse fonctionner pour séparer au moins partiellement des caractéristiques de vol convoluées.

7. Giravion (100) selon la revendication 6, dans lequel la manoeuvre d'approche de vol stationnaire est basée sur une distance entre le giravion (100) et l'emplacement de vol stationnaire ; et facultativement ou préférablement, la manoeuvre d'approche de vol stationnaire étant basée sur une racine carrée de la distance.

8. Giravion (100) selon la revendication 6 ou la revendication 7, dans lequel la manoeuvre d'approche de vol stationnaire comprend au moins un élément parmi :
une augmentation ou une diminution du tangage du giravion (100) ;
une augmentation ou une diminution du roulis du giravion (100) ;
une augmentation ou une diminution du lacet du giravion (100) ; ou
une augmentation ou une diminution du tangage collectif du système de rotor.

9. Giravion (100) selon la revendication 8, dans lequel le FCC peut en outre fonctionner pour maintenir la manoeuvre d'approche de vol stationnaire jusqu'à ce que le giravion (100) soit situé à l'emplacement de vol stationnaire ou jusqu'à ce que le FCC reçoive une commande de pilote ; et facultativement ou préférablement, la commande de pilote étant reçue d'un contrôle cyclique ou d'un contrôle collectif du PCA.

10. Giravion (100) selon l'une quelconque des revendications 6 à 9, dans lequel le FCC peut en outre fonctionner pour déterminer une vitesse anémométrique vers l'avant à partir d'au moins un capteur du giravion (100) .

11. Giravion (100) selon l'une quelconque des revendications 6 à 10, dans lequel la première condition de fonctionnement comprend le fait que le giravion (100) soit :
a) piloté par un pilote automatique ; et/ou
b) en cours de vol vers l'avant à une vitesse anémométrique supérieure à 0 noeud.

12. Giravion (100) selon l'une quelconque des revendications 6 à 11, dans lequel l'emplacement de vol stationnaire est à environ 15,24 mètres (50 pieds) au-dessus de la cible (1020).

13. Giravion (100) selon l'une quelconque des revendications 6 à 12, dans lequel le système de rotor (110) comprend au moins un système de rotor principal (110) et/ou un système de rotor arrière.

14. Procédé, comprenant :
le fait de faire fonctionner un giravion (100) selon la revendication 6 dans une première condition de fonctionnement du système de contrôle de vol (FCS) (900) ;
le survol de l'emplacement du vol stationnaire par le giravion (100) ;
le fait d'aborder la manoeuvre d'approche de vol stationnaire selon l'itinéraire RTT en réponse à la deuxième commande de pilote de retourner à la cible (1020) ; et
la transition vers la deuxième condition de fonctionnement du FCS (900) par le FCC en réponse au fait que la FCC aborde la manoeuvre d'approche de vol stationnaire.

15. Procédé selon la revendication 14, dans lequel la transition du FCC vers la deuxième condition de fonctionnement comprend :
le changement d'une première caractéristique de vol, où le changement de la première caractéristique de vol aurait corne résultat un changement attendu d'une deuxième caractéristique de vol, et la première caractéristique de vol et la deuxième caractéristique de vol ayant une relation couplée de façon inhérente ;
le fait de donner instruction au FCS (900) de changer la première condition de fonctionnement du FCS (900) sur la base de la relation couplée de façon inhérente ; et
le fait de donner instruction au FCS (900) de passer à la deuxième condition de fonctionnement du FCS (900) en réponse au changement attendu de la deuxième caractéristique de vol, la deuxième condition de fonctionnement pouvant fonctionner pour décaler au moins partiellement le changement attendu de la deuxième caractéristique de vol de telle sorte que le FCS (900) puisse fonctionner pour découpler au moins partiellement la relation couplée de façon inhérente de la première caractéristique de vol et la deuxième caractéristique de vol.

16. Procédé selon la revendication 15, dans lequel au moins un élément parmi :
la manoeuvre d'approche de vol stationnaire est basée sur une distance entre le giravion (100) et l'emplacement de vol stationnaire ;
un profil de descente de la manoeuvre d'approche de vol stationnaire est déterminé sur la base d'une racine carrée de la distance ;
le profil de descente comprend une vitesse verticale et un taux de décélération du giravion (100) ;
la vitesse verticale et le taux de décélération sont ajustés de façon itérative sur la base de la racine carrée de la distance lorsque le giravion (100) s'approche de l'emplacement de vol stationnaire ;
l'ajustement itératif comprend la mise à jour en continu d'une erreur de position ;
une durée de la manoeuvre d'approche de vol stationnaire est comprise entre environ 2 minutes et environ 3 minutes ;
la détermination du profil de descente est différente de celle consistant à utiliser une évaluation de seuil « si/alors » ;
la manoeuvre d'approche de vol stationnaire n'inclut pas d'évaluation de seuil de vitesse « si/alors » pour aborder le profil de descente ;
la manoeuvre d'approche de vol stationnaire n'inclut pas d'évaluation de seuil d'altitude « si/alors » pour aborder le profil de descente ;
la manoeuvre d'approche de vol stationnaire comprend au moins un élément parmi :
une augmentation ou une diminution du tangage ;
une augmentation ou une diminution du roulis ;
une augmentation ou une diminution du lacet ; ou
une augmentation ou une diminution du tangage collectif ;
le FCC peut en outre fonctionner pour maintenir la manoeuvre d'approche de vol stationnaire jusqu'à ce que le giravion (100) soit situé à l'emplacement de vol stationnaire ou jusqu'à ce que le FCC reçoive une commande de pilote ;
la commande de pilote est reçue d'un contrôle cyclique ou d'un commande collectif du PCA ;
le FCC peut en outre fonctionner pour déterminer une vitesse anémométrique vers l'avant à partir d'au moins un capteur du giravion (100) ;
la première condition de fonctionnement comprend le fait que le giravion (100) soit piloté par un pilote automatique ;
la première condition de fonctionnement comprend le fait que le giravion (100) soit en cours de vol vers l'avant à une vitesse anémométrique supérieure à 0 noeud ;
l'emplacement de vol stationnaire est à environ 15,24 mètres (50 pieds) au-dessus de la cible (1020) ; ou
le giravion (100) comprend au moins un système de rotor principal (110) et/ou un système de rotor arrière.
